(19) Europäisches Patentamt
European Patent Office
Office européen des brevets

(11) **EP 3 016 221 B1**

(12) **FASCICULE DE BREVET EUROPEEN**

(45) Date de publication et mention de la délivrance du brevet:
**26.07.2017 Bulletin 2017/30**

(51) Int Cl.:
***H02B 1/56*** *(2006.01)*

(21) Numéro de dépôt: **15178564.9**

(22) Date de dépôt: **28.07.2015**

(54) **Procédé de sélection d'une architecture d'armoire électrique, produit programme d'ordinateur et dispositif électronique de sélection associés**

Verfahren zum Auswählen einer Architektur eines Schaltschrankes, zugehöriges Computerprogrammprodukt und elektronische Auswahleinrichtung

Method for selecting an architecture of an electrical cabinet, associated computer program product and electronic selection device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2014 FR 1460568**

(43) Date de publication de la demande:
**04.05.2016 Bulletin 2016/18**

(73) Titulaire: **Schneider Electric Industries SAS 92500 Rueil-Malmaison (FR)**

(72) Inventeurs:
• **AGNAOU, Abderrahmane 38050 GRENOBLE (FR)**
• **BRICKA, Jordan 38050 GRENOBLE (FR)**
• **PERRIN, Alain 38050 GRENOBLE (FR)**

(74) Mandataire: **Lavoix 2, place d'Estienne d'Orves 75441 Paris Cedex 09 (FR)**

(56) Documents cités:
**WO-A1-03/056672     WO-A1-2013/083421 US-B1- 6 341 064**

**Description**

La présente invention concerne les armoires électriques du type comprenant au moins un module dans lequel sont logées une pluralité d'unités fonctionnelles électriques, lesdites unités fonctionnelles électriques étant agencées suivant un plan de séparation du module délimitant :

- une première zone thermique froide formée par un premier espace du module situé d'un premier côté du plan de séparation, et
- une seconde zone thermique d'échauffement formée par un deuxième espace du module situé d'un deuxième côté du plan de séparation.

Des armoires électriques de ce type sont connues et sont décrites par exemple dans WO-A-2013/083421, EP-A-2 779 334 et EP-A-2 779 335. En séparant l'intérieur du ou de chaque module de l'armoire électrique entre une zone froide et une zone chaude, les unités fonctionnelles étant disposées à l'interface entre ces deux zones, il est possible de tenir compte de la spécificité thermique de chaque appareil électrique monté sur une unité fonctionnelle et d'optimiser ainsi le fonctionnement de l'armoire en plaçant chaque appareil électrique dans une zone thermique où la température est la plus proche de la température à laquelle le rendement de l'appareil électrique est optimal.

Toutefois, il est généralement nécessaire de refroidir l'armoire électrique afin de maintenir les températures dans les première et deuxième zones thermiques du ou de chaque module au plus près des températures auxquelles les rendements des appareils électriques de l'armoire sont optimaux. Or il est difficile d'appréhender a priori les besoins frigorifiques de l'armoire pour maintenir les températures dans les zones thermiques à des niveaux acceptables. Il est également difficile d'évaluer quelle architecture de l'armoire permet de minimiser les besoins frigorifiques de l'armoire. Cela conduit le plus souvent à surdimensionner les unités frigorifiques refroidissant l'armoire, au détriment de la consommation électrique de l'armoire.

Un objectif de l'invention est de permettre de déterminer facilement une architecture de l'armoire électrique pour laquelle les besoins frigorifiques de l'armoire sont réduits.

A cet effet, l'invention a pour objet un procédé de sélection d'une architecture d'armoire électrique, ladite armoire électrique étant du type précité, le procédé étant mis en oeuvre par ordinateur et comprenant les étapes suivantes :

- recherche, à partir de données relatives à l'armoire électrique, parmi une pluralité d'architectures envisagées pour l'armoire électrique, d'une architecture dite passive pour laquelle la température à l'intérieur de chaque première et deuxième zone thermique du ou de chaque module est inférieure à une température de consigne prédéterminée pour ladite zone thermique, sans injection d'une puissance frigorifique à l'intérieur de l'armoire, et
- en cas d'identification d'une architecture dite passive :

    ◦ sélection de l'architecture dite passive,

- en l'absence d'identification d'une architecture dite passive :

    ◦ recherche, à partir des données relatives à l'armoire électrique, parmi la pluralité d'architectures envisagées, d'une architecture dite économe pour laquelle les températures de consigne prédéterminées pour chacune des première et deuxième zones thermiques du ou de chaque module sont atteintes par injection, dans la première zone thermique d'au moins un module de l'armoire électrique, d'une puissance frigorifique minimale, et
    ◦ sélection de ladite architecture dite économe.

Selon des modes de réalisation particuliers de l'invention, le procédé de sélection présente également l'une ou plusieurs des caractéristiques suivantes, prise(s) isolément ou suivant toute(s) combinaison(s) techniquement possible(s) :

- l'étape de recherche de l'architecture dite passive comprend les sous-étapes suivantes :

    ◦ calcul, à partir des données relatives à l'armoire électrique, pour chaque architecture de la pluralité d'architectures envisagées, d'une première température de fonctionnement dans la première zone thermique du ou de chaque module et d'une deuxième température de fonctionnement dans la deuxième zone thermique du ou de chaque module,
    ◦ comparaison de chacune des première et deuxième températures de fonctionnement calculées avec la température de consigne pour la première ou deuxième zone thermique correspondante, et
    ◦ détermination de chaque architecture pour laquelle chacune des première et deuxième températures calculées est inférieure à la température de consigne pour la première ou deuxième zone thermique correspondante comme étant une architecture dite passive ;

- l'étape de recherche de l'architecture dite économe comprend les sous-étapes suivantes :

  ∘ calcul, à partir des données relatives à l'armoire électrique, pour chaque architecture de la pluralité d'architectures envisagées, d'une puissance frigorifique à injecter dans la première zone thermique d'au moins un module de l'armoire pour atteindre les températures de consigne prédéterminées dans les première et deuxième zones thermiques du ou de chaque module, et
  ∘ comparaison de la puissance frigorifique à injecter pour chaque architecture envisagée avec la puissance frigorifique à injecter pour chaque autre architecture envisagée, la puissance frigorifique à injecter la plus faible constituant la puissance frigorifique minimale ;

- l'étape de calcul de la puissance frigorifique à injecter comprend, pour chaque architecture de la pluralité d'architectures envisagées, les sous-étapes suivantes :

  ∘ calcul, à partir des données relatives à l'armoire électrique, pour chacune des première et deuxième zones thermiques du ou de chaque module, d'une puissance frigorifique locale devant être injectée dans ladite zone thermique pour atteindre la température de consigne pour ladite zone thermique ;
  ∘ calcul d'une puissance frigorifique globale par addition des puissances frigorifiques locales,
  ∘ calcul, à partir des données relatives à l'armoire électrique, et en simulant l'injection de la puissance frigorifique globale dans la première zone thermique d'au moins un module (de l'armoire, des températures de fonctionnement dans chacune des première et deuxième zones thermiques du ou de chaque module,
  ∘ comparaison de chaque température de fonctionnement calculée avec la température de consigne pour la zone thermique correspondante, et
  ∘ dans le cas où chaque température calculée est inférieure à la température de consigne pour la zone thermique correspondante :

    ▪ détermination de la puissance frigorifique globale comme étant la puissance frigorifique à injecter,

  ∘ dans le cas où au moins une température calculée est strictement supérieure à la température de consigne pour la zone thermique correspondante :

    ▪ réitération des étapes de calcul des températures et de comparaison des températures jusqu'à ce que chaque température calculée soit inférieure à la température de consigne pour la zone thermique, correspondante, la simulation de l'injection de la puissance frigorifique globale dans la première zone thermique d'au moins un module de l'armoire étant remplacée, à chaque itération, par la simulation de l'injection, dans ladite première zone thermique, d'une puissance frigorifique d'intensité supérieure à l'intensité de la puissance frigorifique dont l'injection a été simulée à l'itération précédente, et
    ▪ détermination de la puissance frigorifique dont l'injection a été simulée à la dernière itération comme étant la puissance frigorifique à injecter.

- l'armoire comprend une pluralité de modules accolés les uns aux autres, les plans de séparation desdits modules étant sensiblement alignés dans un même plan ;
- le procédé comprend une étape supplémentaire de choix, en fonction de la valeur de la puissance frigorifique globale, d'au moins un module d'injection de la puissance frigorifique dans lequel l'injection de la puissance frigorifique est simulée, le module d'injection de la puissance frigorifique étant constitué par un unique module central de l'armoire lorsque la valeur de la puissance frigorifique globale est strictement inférieure à une valeur prédéterminée, et les modules d'injection de la puissance frigorifique étant constitués par deux modules périphériques de l'armoire lorsque la valeur de la puissance frigorifique globale est supérieure à la valeur prédéterminée ;
- les architectures envisagées comprennent les architectures suivantes :

  ∘ une première architecture, dans laquelle le plan de séparation est obstrué sur sensiblement l'intégralité de sa surface,
  ∘ une deuxième architecture, dans laquelle une fenêtre de surface supérieure à 2% de la surface du plan de séparation est laissée libre dans le plan de séparation, de sorte à faciliter la circulation d'air entre les première et seconde zones thermiques, et
  ∘ une troisième architecture, dans laquelle une fenêtre de surface supérieure à 2% de la surface du plan de séparation est laissée libre dans le plan de séparation, de sorte à faciliter la circulation d'air entre les première et seconde zones thermiques, et au moins un ventilateur est installé dans le plan de séparation, de sorte à forcer la convection d'air de la première zone thermique vers la deuxième zone thermique ;

- la fenêtre est disposée en partie haute du plan de séparation, et le ou chaque ventilateur est disposé en partie basse du plan de séparation ;
- le procédé comprend une étape d'affichage de l'architecture sélectionnée ;
- le procédé comprend les étapes supplémentaires suivantes :

  ◦ calcul, pour l'architecture sélectionnée, à partir des données relatives à l'armoire électrique, et en simulant le cas échéant l'injection de la puissance frigorifique à injecter dans la première zone thermique d'au moins un module de l'armoire, d'une première température moyenne dans la ou les première(s) zone(s) thermique(s) et d'une deuxième température moyenne dans la ou les deuxième(s) zone(s) thermique(s), et
  ◦ affichage des première et deuxième températures moyennes.

- le procédé comprend, en l'absence d'identification d'une architecture dite passive, une étape d'affichage de la puissance frigorifique minimale.

L'invention a également pour objet un produit programme d'ordinateur comprenant des instructions logicielles qui, lorsqu'elles sont exécutées par un ordinateur, mettent en oeuvre un procédé de sélection tel que défini ci-dessus.
L'invention a également pour objet un support physique comprenant une mémoire dans laquelle est stocké un produit programme d'ordinateur tel que défini ci-dessus.
L'invention a également pour objet un dispositif électronique de sélection d'une architecture d'armoire électrique, ladite armoire électrique étant du type précisé, le dispositif électronique comprenant :

- un premier organe de recherche, programmé pour rechercher, à partir de données relatives à l'armoire électrique, parmi une pluralité d'architectures envisagées pour l'armoire électrique, une architecture dite passive pour laquelle la température à l'intérieur de chaque première et deuxième zone thermique du ou de chaque module est inférieure à une température de consigne prédéterminée pour ladite zone thermique, sans injection d'une puissance frigorifique à l'intérieur de l'armoire ;
- un deuxième organe de recherche, programmé pour rechercher, en l'absence d'identification d'une architecture dite passive, à partir des données relatives à l'armoire électrique, parmi la pluralité d'architectures envisagées, une architecture dite économe pour laquelle les températures de consigne prédéterminées pour chacune des première et deuxième zones thermiques du ou de chaque module sont atteintes par l'injection, dans la première zone thermique d'au moins un module de l'armoire électrique, d'une puissance frigorifique minimale, et
- un organe de sélection d'une architecture parmi la pluralité d'architectures envisagées, programmé pour sélectionner l'architecture dite passive en cas d'identification d'une architecture dite passive, et pour sélectionner l'architecture dite économe en l'absence d'identification d'une architecture dite passive.

L'invention a également pour objet un ensemble comportant :

- une armoire électrique comprenant au moins un module dans lequel sont logées une pluralité d'unités fonctionnelles électriques, lesdites unités fonctionnelles électriques étant agencées suivant un plan de séparation du module délimitant :

  ◦ une première zone thermique froide formée par un premier espace du module situé d'un premier côté du plan de séparation, et
  ◦ une seconde zone thermique d'échauffement formée par un deuxième espace du module situé d'un deuxième côté du plan de séparation, et

- un dispositif électronique de sélection d'une architecture de ladite armoire électrique, ledit dispositif électronique de sélection étant un dispositif électronique de sélection tel que défini ci-dessus.

D'autres caractéristiques et avantages de l'invention apparaîtront à la lecture de la description qui va suivre, donnée uniquement à titre d'exemple et faite en se référant aux dessins annexés, dans lesquels :

- la Figure 1 est une vue en perspective d'une armoire électrique,
- la Figure 2 est une vue en perspective d'une unité fonctionnelle de l'armoire électrique de la Figure 1,

- la Figure 3 est une vue en coupe de l'armoire électrique de la Figure 1, dans laquelle l'armoire électrique présente une première architecture,
- la Figure 4 est une vue en coupe de l'armoire électrique de la Figure 1, dans laquelle l'armoire électrique présente une deuxième architecture,
- la Figure 5 est une vue en coupe de l'armoire électrique de la Figure 1, dans laquelle l'armoire électrique présente une troisième architecture,
- la Figure 6 est un schéma d'un dispositif de sélection selon l'invention, et
- la Figure 7 est un diagramme en blocs illustrant un procédé de sélection mis en oeuvre par le dispositif de sélection de la Figure 6.

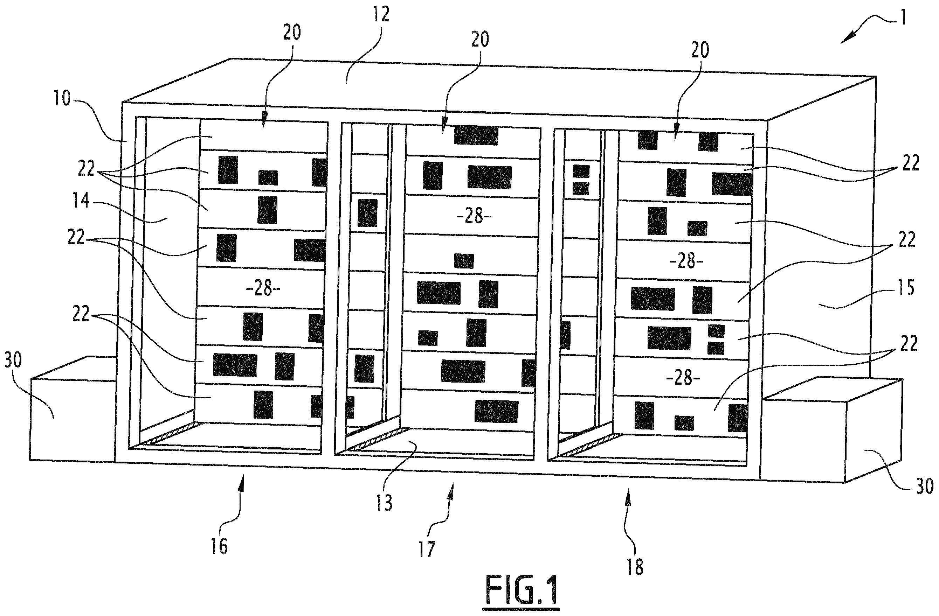

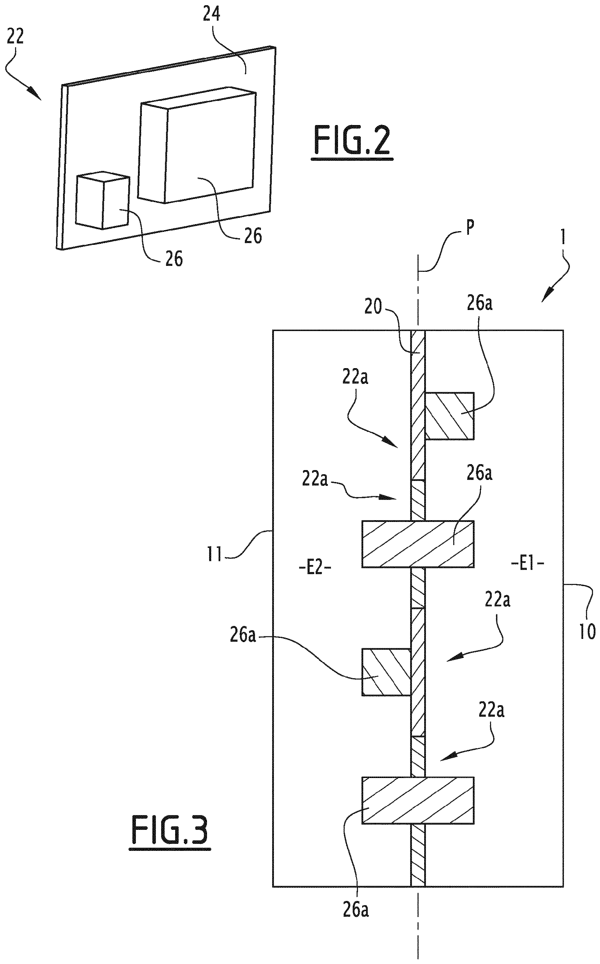

L'armoire électrique 1, représentée sur la Figure 1, a une forme sensiblement parallélépipédique. Elle comporte une paroi avant 10, une paroi arrière 11 (Figure 3), une paroi supérieure 12, une paroi inférieure 13 et deux parois latérales 14, 15.

La paroi avant 10 de l'armoire électrique 1 comporte par exemple une porte (non représentée) d'accès à l'intérieur de l'armoire 1.

Cette armoire électrique 1 est de préférence étanche, par exemple conforme à la norme IEC 60529 avec un indice IP55.

L'armoire électrique 1 est formée de la réunion de trois modules 16, 17, 18 : un module central 17 et deux modules périphériques 16, 18 encadrant ensemble le module central 17. Chaque module périphérique 16, 18 comprend une partie de la paroi avant 10, une partie de la paroi arrière 11, une partie de la paroi supérieure 12, une partie de la paroi inférieure 13, et l'une des parois latérales 14, 15. Le module central 17 comprend une partie de la paroi avant 10, une partie de la paroi arrière 11, une partie de la paroi supérieure 12, et une partie de la paroi inférieure 13.

Les modules 16, 17, 18 sont accolés les uns aux autres et sont en contact les uns avec les autres suivant des interfaces de contact décloisonnées. Le module central 17 présente ainsi deux interfaces de contact, chacune avec un module périphérique 16, 18 respectif, et chaque module périphérique 16, 18 présente une unique interface de contact, ladite interface de contact étant une interface de contact avec le module central 17.

A l'intérieur de l'armoire électrique 1, chaque module 16, 17, 18 comporte une paroi de séparation 20 agencée suivant un plan de séparation P (Figure 3) délimitant un premier espace E1 (Figure 3) situé vers la partie avant de l'armoire électrique 1 et un deuxième espace E2 (Figure 3) situé vers la partie arrière de l'armoire électrique 1. Le plan de séparation P est de préférence parallèle aux parois avant 10 et arrière 11 de l'armoire électrique 1. Les plans de séparation P des différents modules 16, 17, 18 sont de préférence alignés les uns avec les autres dans un même plan.

La paroi de séparation 20 de chaque module 16, 17, 18 comprend plusieurs unités fonctionnelles 22 amovibles.

En référence à la Figure 2, chaque unité fonctionnelle 22 comporte un support 24 adapté pour se fixer sur des moyens de fixation du module 16, 17, 18, constitués par exemple de deux montants (non représentés) verticaux parallèles du module 16, 17, 18 positionnés dans le plan de séparation P. Chaque unité fonctionnelle 22 comporte également au moins un appareil 26, porté par une face du support 24. On notera qu'une même unité fonctionnelle 22 peut porter un appareil 26 sur chacune de ses deux faces.

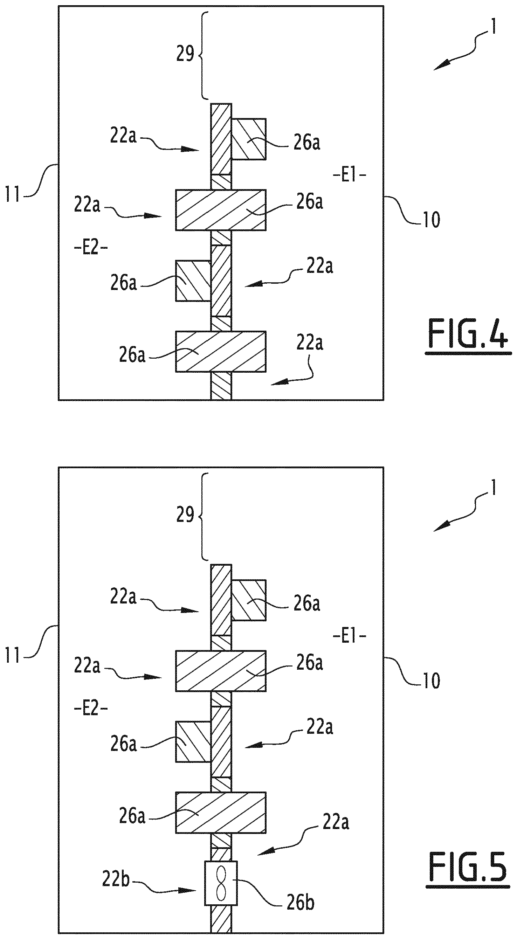

Les unités fonctionnelles 22 comprennent des unités fonctionnelles électriques 22a (Figure 3), c'est-à-dire des unités fonctionnelles 22 dans lesquelles le ou chaque appareil 26 est un appareil électrique 26a (Figure 3), tel que par exemple un disjoncteur, un contacteur électromécanique, un départ-moteur, un variateur de vitesse, un démarreur, un filtre ou une résistance de freinage, des composants d'automatismes tels que des automates, des modules d'entrées sorties et/ou des îlots de communication. Dans certaines variantes, telles que la variante de la Figure 5, les unités fonctionnelles 22 comprennent également des unités fonctionnelles de ventilation 22b, c'est-à-dire des unités fonctionnelles 22 dans lesquelles le ou chaque appareil 26 est un ventilateur 26b. Dans d'autres variantes (non représentées), les unités fonctionnelles 22 comprennent également des unités fonctionnelles de refroidissement.

Chaque support d'unité fonctionnelle fixée, de manière amovible, sur les moyens de fixation présente deux faces parallèles au plan de séparation P, une face avant située du côté du premier espace E1 et une face arrière située du côté du second espace E2.

De retour à la Figure 1, les unités fonctionnelles 22 sont positionnées de manière adjacente suivant le plan de séparation P de manière à combler le plan de séparation P pour former la paroi de séparation 20. Dans les cas où le nombre d'unités fonctionnelles 22 ne suffit pas à former toute la paroi de séparation 20, des caches 28 sont généralement positionnés suivant le plan de séparation P, de manière adjacente aux unités fonctionnelles 22. Ces caches 28 sont alors formés par les seuls supports 24 des unités fonctionnelles 22, et ne comportent pas d'appareil 26.

En variante, la paroi de séparation 20 ne comble pas intégralement le plan de séparation P, de sorte qu'une fenêtre 29 (Figure 4) est laissée libre en partie haute du plan de séparation P, de façon à faciliter la circulation d'air entre les premier et deuxième espaces E1, E2 du module 16, 17, 18. Ladite fenêtre 29 s'étend de préférence sur toute la largeur du plan de séparation P, et a une hauteur comprise entre 5 et 10 cm. La fenêtre 29 présente ainsi une surface comprise entre 2% et 8 % de la surface du plan de séparation P.

En référence à la Figure 3, certains appareils électriques 26a sont entièrement situés dans le premier espace E1, c'est-à-dire fixés sur la face avant du support 24 de l'unité fonctionnelle électrique 22a. Ces appareils électriques 26a présents dans le premier espace E1 sont de préférence des appareils électriques dégagent peu de calories, comme par exemple des appareils de contrôle-commande tels que des disjoncteurs ou des contacteurs électromécaniques, automates...

Certains appareils électriques 26a sont situés uniquement dans le deuxième espace E2, c'est-à-dire fixes sur la face arrière du support 24 de l'unité fonctionnelle électrique 22a. Ces appareils électriques 26a présents uniquement dans le deuxième espace E2 sont de préférence des appareils électriques dégageant beaucoup de calories, comme par exemple des inductances de lissage ou des résistances de freinage, des transformateurs, ou des systèmes de distribution électrique de puissance.

Certains appareils électriques 26a traversent leur support 24 de manière a présenter une première partie située dans le premier espace E1 et une deuxième partie située dans le deuxième espace E2. Ces appareils électriques situés en partie dans le premier espace et dans le deuxième espace E2 sont par exemple des appareils dissipateur de puissance du type variateur de vitesse, démarreur progressif, alimentation, contrôleur de mouvement, onduleur... La partie contrôle de ces appareils est alors située à l'avant et la partie puissance dotée des transistors de puissance est située à l'arrière.

Du fait de la présence de la paroi de séparation 20, le volume intérieur de chaque module 16, 17, 18 est ainsi divisé en deux zones thermiques distinctes :

- une première zone thermique froide formée par le premier espace E1 car elle reçoit des appareils électriques 26a ou parties d'appareils 26a qui ne chauffent pas ou très peu ; en outre, ces appareils sont généralement sensibles à la chaleur et tendent à fonctionner de façon optimale quand la température est limitée ; et
- une seconde zone thermique chaude formée par le deuxième espace E2 car elle reçoit des appareils électriques 26a ou parties d'appareils 26a qui chauffent ; en outre, ces appareils sont généralement peu sensibles à la chaleur et tendent à fonctionner de façon optimale même si la température est plus élevée.

De retour à la Figure 1, l'armoire électrique 1 comporte également, de préférence, au moins un dispositif 30 de refroidissement et de régulation de la température des premier et second espaces E1, E2 de chaque module 16, 17, 18. Le ou chaque dispositif de refroidissement et de régulation 30 est destiné :

- d'une part à fixer et à réguler une première température moyenne de fonctionnement $T1_{moy}$ dans les premiers espaces E1 ; et
- d'autre part à fixer et à réguler une seconde température moyenne de fonctionnement $T2_{moy}$ dans les seconds espaces E2, la seconde température moyenne de fonctionnement $T2_{moy}$ étant supérieure à la première température moyenne de fonctionnement $T1_{moy}$.

La première température moyenne de fonctionnement $T1_{moy}$ est la moyenne de premières températures de fonctionnement T1 dans les premiers espaces E1 des modules 16, 17, 18. La deuxième température moyenne de fonctionnement $T2_{moy}$ est la moyenne de deuxièmes températures de fonctionnement T2 dans les deuxièmes espaces E2 des modules 16, 17, 18.

Le ou chaque dispositif de refroidissement 30 est positionné au contact du premier espace E1 de l'un des modules 16, 17, 18 pour le refroidir. On entend par « être au contact » du premier espace E1 le fait que la puissance frigorifique produite par ledit dispositif de refroidissement 30 est injectée par le dispositif de refroidissement 30 dans ledit premier espace E1.

Le ou chaque dispositif de refroidissement 30 comprend par exemple un groupe de climatisation. En variante, le ou chaque dispositif de refroidissement 30 est constitué par au moins un ventilateur rapporté sur l'une des parois 10, 11, 12, 13, 14, 15 de l'armoire électrique 1.

Dans l'exemple représenté sur la Figure 1, l'armoire électrique 1 comprend ainsi deux dispositifs de refroidissement 30, l'un étant positionné au contact du premier espace E1 d'un premier des modules périphériques 16, l'autre dispositif de refroidissement 30 étant positionné au contact du premier espace E1 du deuxième module périphérique 18. En variante, l'armoire électrique 1 comprend un unique dispositif de refroidissement 30, ledit dispositif 30 étant positionné au contact du premier espace E1 du module central 17.

Comme on l'a vu ci-dessus, de nombreuses architectures sont ainsi possibles pour l'armoire électrique 1 : des architectures dans lesquelles la paroi de séparation 20 obstrue sensiblement intégralement le plan de séparation P, des architectures dans lesquelles une fenêtre 29 est laissée libre dans le plan de séparation P, et des architectures dans lesquelles une unité fonctionnelle de ventilation 22b est intégrée à la paroi de séparation 20. Or ces différentes architectures ont une influence sur la quantité d'énergie nécessaire au fonctionnement du ou de chaque dispositif de refroidissement et de régulation 30 pour fixer et réguler les première et deuxième températures moyennes de fonctionnement $T1_{moy}$, $T2_{moy}$. De même, le positionnement du ou des dispositif(s) de refroidissement et de régulation 30 influe sur cette quantité d'énergie. De façon à pouvoir optimiser l'énergie électrique consommée par l'armoire électrique 1, il est donc nécessaire de choisir l'architecture d'armoire et le positionnement du ou des dispositif(s) de refroidissement et de régulation 30 les plus adaptés.

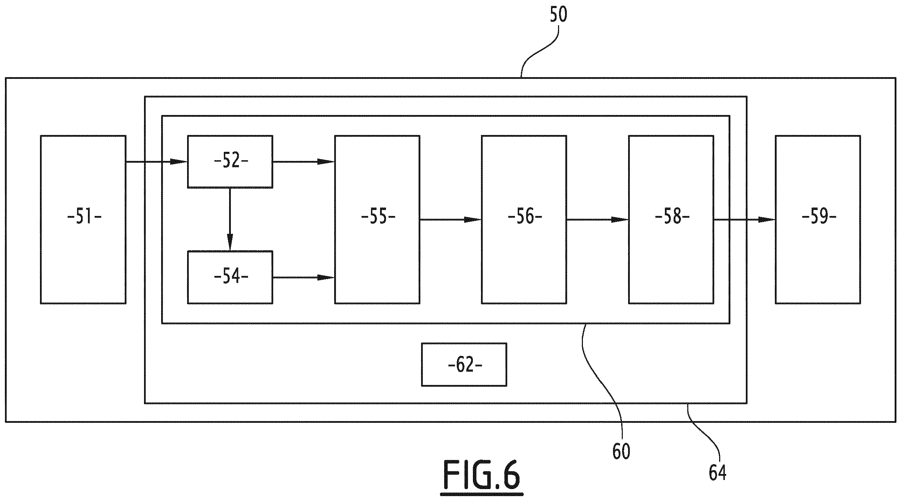

Un dispositif 50 de sélection de l'architecture de l'armoire électrique 1 va maintenant être décrit, en référence à la Figure 6. Ce dispositif de sélection 50 est destiné à sélectionner une architecture de l'armoire électrique 1 parmi une pluralité d'architectures prédéterminées, présentées sur les Figures 3 à 5.

Dans une première des architectures prédéterminées, représentée sur la Figure 3, le plan de séparation P de chaque module 16, 17, 18 est obstrué sur sensiblement l'intégralité de sa surface par la paroi de séparation 20 dudit module 16, 17, 18. Par « le plan de séparation P est obstrué sur sensiblement l'intégralité de sa surface », on comprend que les éventuels interstices laissés libres dans le plan de séparation P occupent au total une surface inférieure à 1,5% de la surface du plan de séparation P, lesdits interstices comprenant par exemple un interstice périphérique à la paroi de séparation 20, ou des interstices internes à la paroi de séparation 20 résultant de défauts présents dans cette paroi de séparation 20.

Dans une deuxième des architectures prédéterminées, représentée sur la Figure 4, dans chaque module 16, 17, 18, une fenêtre 29 de surface comprise entre 2% et 8% de la surface du plan de séparation P dudit module 16, 17, 18, disposée en partie haute dudit plan de séparation P, est laissée libre dans ledit plan de séparation P, de sorte à faciliter la circulation d'air entre les premier et deuxième espaces E1, E2 dudit module 16, 17, 18. Cette fenêtre 29 s'étend en particulier sur toute la largeur du plan de séparation P, et a une hauteur comprise entre 5 cm et 10 cm.

Enfin, dans une troisième des architectures prédéterminées, représentée sur la Figure 5, dans chaque module 16, 17, 18, une fenêtre 29 de surface comprise entre 2% et 8% de la surface du plan de séparation P dudit module 16, 17, 18, disposée en partie haute dudit plan de séparation P, est laissée libre dans ledit plan de séparation P, de sorte à faciliter la circulation d'air entre les premier et deuxième espaces E1, E2 dudit module 16, 17, 18, et une unité fonctionnelle de ventilation 22b est installé en partie basse du plan de séparation P, de sorte à forcer la convection d'air du premier espace E1 dudit module 16, 17, 18 vers le deuxième espace E2 dudit module 16, 17, 18. La fenêtre 29 s'étend en particulier sur toute la largeur du plan de séparation P, et a une hauteur comprise entre 5 cm et 10 cm.

En référence à la Figure 6, le dispositif de sélection 50 comprend un organe 51 d'entrée de données relatives à l'armoire électrique 1, un premier organe 52 de recherche d'une architecture dite passive, un deuxième organe 54 de recherche d'une architecture dite économe, un organe 55 de sélection d'une architecture parmi la pluralité d'architectures envisagées, un organe 56 de calcul des première et deuxième températures moyennes de fonctionnement $T1_{moy}$, $T2_{moy}$ pour l'architecture sélectionnée, un organe 58 de génération d'une image, et un organe 59 d'affichage de ladite image.

L'organe d'entrée 51 est adapté pour l'entrée de données relatives à l'armoire électrique 1, par exemple des données relatives aux dimensions de l'armoire électrique 1 aux unités fonctionnelles électriques 22a installées dans l'armoire électrique 1, à l'altitude d'installation de l'armoire électrique 1, ou à la température à l'extérieur de l'armoire 1, dans une mémoire temporaire (non représentée) du dispositif de sélection 50. L'organe d'entrée 51 est typiquement adapté pour la saisie desdites données par un opérateur utilisant le dispositif de sélection 50. A cet effet, l'organe d'entrée 51 comprend de préférence un périphérique d'interface utilisateur, par exemple un clavier.

Dans l'exemple de réalisation de l'invention, le premier organe de recherche 52, le deuxième organe de recherche 54, l'organe de sélection 55, l'organe de calcul 56 et l'organe de génération 58 sont réalisés sous forme de logiciels stockés dans une mémoire 60 et aptes à être exécutés par un processeur 62, associé à la mémoire 60, le processeur 62 et la mémoire 60 formant une unité de traitement d'informations 64 incluse dans le dispositif de sélection 50. En variante, le premier organe de recherche 52, le deuxième organe de recherche 54, l'organe de sélection 55, l'organe de calcul 56 et l'organe de génération 58 sont réalisés au moins partiellement sous forme de composants logiques programmables, ou encore sous forme de circuits intégrés dédiés, inclus dans le dispositif de sélection 50.

Le premier organe de recherche 52 est programmé pour rechercher, à partir des données relatives à l'armoire électrique 1 entrées via l'organe 51, parmi la pluralité d'architectures envisagées pour ladite armoire électrique 1, une architecture dite passive pour laquelle la température de fonctionnement T1, T2 à l'intérieur de chaque premier et deuxième espace E1, E2 de chaque module 16, 17, 18 est inférieure à une température de consigne prédéterminée $T1_C$, $T2_C$ pour ledit espace E1, E2, sans injection d'une puissance frigorifique à l'intérieur de l'armoire 1, c'est-à-dire sans refroidissement de l'armoire par un dispositif de refroidissement 30.

A cet effet, le premier organe de recherche 52 est programmé pour l'exécution des opérations suivantes :

- calcul de la température de fonctionnement T1, T2 à l'intérieur de chaque premier et deuxième espace E1, E2 de chaque module 16, 17, 18, pour chaque architecture envisagée,
- comparaison des températures de fonctionnement T1, T2 calculées avec les températures de consigne $T1_C$, $T2_C$, pour chaque architecture envisagée, et
- détermination de la ou chaque architecture dite passive.

L'opération de calcul comprend la résolution, pour chaque architecture envisagée, de l'équation matricielle

suivante :

$$e1 : \vec{T} = \left(\bar{I} - \bar{\bar{M}}\right)^{-1} \times \vec{V}$$

$$\vec{T} = \begin{pmatrix} T1_{16} \\ T2_{16} \\ T1_{17} \\ T2_{17} \\ T1_{18} \\ T2_{18} \end{pmatrix}, \bar{\bar{M}} = \begin{pmatrix} -M2 & M1 & M3 & 0 & 0 & 0 \\ M14 & -M4 & 0 & M5 & 0 & 0 \\ M17 & 0 & -M7 & M6 & M8 & 0 \\ 0 & M18 & M15 & -M9 & 0 & M10 \\ 0 & 0 & M19 & 0 & -M12 & M11 \\ 0 & 0 & 0 & M20 & M16 & -M13 \end{pmatrix}, \vec{V} = \begin{pmatrix} V1 \\ V2 \\ V3 \\ V4 \\ V5 \\ V6 \end{pmatrix}$$ et $\bar{I}$ est la matrice

Avec identité Où :

- les inconnues sont $T1_{16}$, $T2_{16}$, $T1_{17}$, $T2_{17}$, $T1_{18}$, $T2_{18}$, et désignent respectivement :

  ○ la température de fonctionnement calculée à l'intérieur du premier espace E1 du premier module périphérique 16,
  ○ la température de fonctionnement calculée à l'intérieur du deuxième espace E2 du premier module périphérique 16,
  ○ la température de fonctionnement calculée à l'intérieur du premier espace E1 du module central 17,
  ○ la température de fonctionnement calculée à l'intérieur du deuxième espace E2 du module central 17,
  ○ la température de fonctionnement calculée à l'intérieur du premier espace E1 du deuxième module périphérique 18, et
  ○ la température de fonctionnement calculée à l'intérieur du deuxième espace E2 du deuxième module périphérique 18, et

- les termes M1, M2, M3, M4, M5, M6, M7, M8, M9, M10, M11, M12, M13, M14, M15, M16, M17, M18, M19, M20, V1, V2, V3, V4, V5 et V6 sont des coefficients fixes dont les valeurs dépendent des dimensions de l'armoire électrique 1, des unités fonctionnelles installées dans l'armoire électrique 1 et de la température à l'extérieur de l'armoire électrique 1.

A titre d'exemple, les termes V1, V2, V3, V4, V5 et V6 sont respectivement égaux à, pour chacune des architectures envisagées :

- $V1 : \dfrac{P1_{16}}{h_e \times S1_{16}} + T_{ext}$

- $V2 : \dfrac{P2_{16}}{h_e \times S2_{16}} + T_{ext}$

- $V3 : \dfrac{P1_{17}}{h_e \times S1_{17}} + T_{ext}$

- $V4 : \dfrac{P2_{17}}{h_e \times S2_{17}} + T_{ext}$

- $V5 : \dfrac{P1_{18}}{h_e \times S1_{18}} + T_{ext}$

- $V6 : \dfrac{P2_{18}}{h_e \times S2_{18}} + T_{ext}$

Avec :

- $P1_{16}$ désigne la puissance calorifique dégagée par les appareils 26 installés dans le premier espace E1 du premier module périphérique 16, ce terme étant typiquement calculé à partir de données, entrées par l'opérateur, relatives aux unités fonctionnelles installées dans l'armoire 1,
- $P2_{16}$ désigne la puissance calorifique dégagée par les appareils 26 installés dans le deuxième espace E2 du premier module périphérique 16, ce terme étant typiquement calculé à partir des données relatives aux unités fonctionnelles installées dans l'armoire 1 entrées par l'opérateur,

- $P1_{17}$ désigne la puissance calorifique dégagée par les appareils 26 installés dans le premier espace E1 du module central 17, ce terme étant typiquement calculé à partir des données relatives aux unités fonctionnelles installées dans l'armoire 1 entrées par l'opérateur,
- $P2_{17}$ désigne la puissance calorifique dégagée par les appareils 26 installés dans le deuxième espace E2 du module central 17, ce terme étant typiquement calculé à partir des données relatives aux unités fonctionnelles installées dans l'armoire 1 entrées par l'opérateur,
- $P1_{18}$ désigne la puissance calorifique dégagée par les appareils 26 installés dans le premier espace E1 du deuxième module périphérique 18, ce terme étant typiquement calculé à partir des données relatives aux unités fonctionnelles installées dans l'armoire 1 entrées par l'opérateur,
- $P2_{18}$ désigne la puissance calorifique dégagée par les appareils 26 installés dans le deuxième espace E2 du deuxième module périphérique 18, ce terme étant typiquement calculé à partir des données relatives aux unités fonctionnelles installées dans l'armoire 1 entrées par l'opérateur,
- $h_e$ désigne le coefficient d'échange global des parois 10, 11, 12, 13, 14, 15 de l'armoire 1, ce terme étant typiquement mémorisé dans une mémoire (non représentée) du dispositif 50,
- $S1_{16}$ désigne la surface d'échange avec l'extérieur de l'armoire 1 du premier espace E1 du premier module périphérique 16, ce terme étant typiquement calculé à partir de données, entrées par l'opérateur, relatives aux dimensions de l'armoire 1,
- $S2_{16}$ désigne la surface d'échange avec l'extérieur de l'armoire 1 du deuxième espace E2 du premier module périphérique 16, ce terme étant typiquement calculé à partir des données relatives aux dimensions de l'armoire 1 entrées par l'opérateur,
- $S1_{17}$ désigne la surface d'échange avec l'extérieur de l'armoire 1 du premier espace E1 du module central 17, ce terme étant typiquement calculé à partir des données relatives aux dimensions de l'armoire 1 entrées par l'opérateur,
- $S2_{17}$ désigne la surface d'échange avec l'extérieur de l'armoire 1 du deuxième espace E2 du module central 17, ce terme étant typiquement calculé à partir des données relatives aux dimensions de l'armoire 1 entrées par l'opérateur,
- $S1_{18}$ désigne la surface d'échange avec l'extérieur de l'armoire 1 du premier espace E1 du deuxième module périphérique 18, ce terme étant typiquement calculé à partir des données relatives aux dimensions de l'armoire 1 entrées par l'opérateur,
- $S2_{18}$ désigne la surface d'échange avec l'extérieur de l'armoire 1 du deuxième espace E2 du deuxième module périphérique 18, ce terme étant typiquement calculé à partir des données relatives aux dimensions de l'armoire 1 entrées par l'opérateur,
- $T_{ext}$ désigne la température ambiante à l'extérieur de l'armoire 1, la valeur de ce terme étant typiquement entrée par l'opérateur,

A titre d'exemple, les termes M1, M2, M3, M4, M5, M6, M7, M8, M9, M10, M11, M12, M13, M14, M15, M16, M17, M18, M19 et M20 sont respectivement égaux à :

- pour la première architecture envisagée :

  ○ $M1 : \dfrac{h_i \times S_{P16} + \rho_{air} \times Cp_{air} \times D_{défauts,16}}{h_e \times S1_{16}}$,

  ○ $M2 : \dfrac{h_i \times S_{P16} + \rho_{air} \times Cp_{air} \times (D_{défauts,16} + D_{E1,16,17})}{h_e \times S1_{16}}$,

  ○ $M3 : \dfrac{\rho_{air} \times Cp_{air} \times D_{E1,16,17}}{h_e \times S1_{16}}$,

  ○ $M4 : \dfrac{h_i \times S_{P16} + \rho_{air} \times Cp_{air} \times (D_{défauts,16} + D_{E2,16,17})}{h_e \times S2_{16}}$,

  ○ $M5 : \dfrac{\rho_{air} \times Cp_{air} \times D_{E2,16,17}}{h_e \times S2_{16}}$,

  ○ $M6 : \dfrac{h_i \times S_{P17} + \rho_{air} \times Cp_{air} \times D_{défauts,17}}{h_e \times S1_{17}}$,

  ○ $M7 : \dfrac{h_i \times S_{P17} + \rho_{air} \times Cp_{air} \times (D_{défauts,17} + D_{E1,16,17} + D_{E1,17,18})}{h_e \times S1_{17}}$,

M8 : $\dfrac{\rho_{air} \times Cp_{air} \times D_{E1,17,18}}{h_e \times S1_{17}}$,

○

M9 : $\dfrac{h_i \times S_{P17} + \rho_{air} \times Cp_{air} \times (D_{défauts,17} + D_{E2,16,17} + D_{E2,17,18})}{h_e \times S2_{17}}$,

○

M10 : $\dfrac{\rho_{air} \times Cp_{air} \times D_{E2,17,18}}{h_e \times S2_{17}}$,

○

M11 : $\dfrac{h_i \times S_{P18} + \rho_{air} \times Cp_{air} \times D_{défauts,18}}{h_e \times S1_{18}}$,

○

M12 : $\dfrac{h_i \times S_{P18} + \rho_{air} \times Cp_{air} \times (D_{défauts,18} + D_{E1,17,18})}{h_e \times S1_{18}}$,

○

M13 : $\dfrac{h_i \times S_{P18} + \rho_{air} \times Cp_{air} \times (D_{défauts,18} + D_{E2,17,18})}{h_e \times S2_{18}}$,

○

M14 : $\dfrac{h_i \times S_{P16} + \rho_{air} \times Cp_{air} \times D_{défauts,16}}{h_e \times S2_{16}}$,

○

M15 : $\dfrac{h_i \times S_{P17} + \rho_{air} \times Cp_{air} \times D_{défauts,17}}{h_e \times S1_{17}}$,

○

M16 : $\dfrac{h_i \times S_{P18} + \rho_{air} \times Cp_{air} \times D_{défauts,18}}{h_e \times S2_{18}}$,

○

M17 : $\dfrac{\rho_{air} \times Cp_{air} \times D_{E1,16,17}}{h_e \times S1_{17}}$,

○

M18 : $\dfrac{\rho_{air} \times Cp_{air} \times D_{E2,16,17}}{h_e \times S2_{17}}$,

○

M19 : $\dfrac{\rho_{air} \times Cp_{air} \times D_{E1,17,18}}{h_e \times S1_{18}}$,

○

M20 : $\dfrac{\rho_{air} \times Cp_{air} \times D_{E2,17,18}}{h_e \times S2_{18}}$,

○

- pour la deuxième architecture envisagée :

M1 : $\dfrac{h_i \times S_{P16} + \rho_{air} \times Cp_{air} \times (D_{défauts,16} + D_{fenêtre,16})}{h_e \times S1_{16}}$,

○

M2 : $\dfrac{h_i \times S_{P16} + \rho_{air} \times Cp_{air} \times (D_{défauts,16} + D_{E1,16,17} + D_{fenêtre,16})}{h_e \times S1_{16}}$,

○

M3 : $\dfrac{\rho_{air} \times Cp_{air} \times D_{E1,16,17}}{h_e \times S1_{16}}$,

○

M4 : $\dfrac{h_i \times S_{P16} + \rho_{air} \times Cp_{air} \times (D_{défauts,16} + D_{E2,16,17} + D_{fenêtre,16})}{h_e \times S2_{16}}$,

○

M5 : $\dfrac{\rho_{air} \times Cp_{air} \times D_{E2,16,17}}{h_e \times S2_{16}}$,

○

M6 : $\dfrac{h_i \times S_{P17} + \rho_{air} \times Cp_{air} \times (D_{défauts,17} + D_{fenêtre,17})}{h_e \times S1_{17}}$,

○

M7 : $\dfrac{h_i \times S_{P17} + \rho_{air} \times Cp_{air} \times (D_{défauts,17} + D_{fenêtre,17} + D_{E1,16,17} + D_{E1,17,18})}{h_e \times S1_{17}}$,

○

M8 : $\dfrac{\rho_{air} \times Cp_{air} \times D_{E1,17,18}}{h_e \times S1_{17}}$,

○

M9 : $\dfrac{h_i \times S_{P17} + \rho_{air} \times Cp_{air} \times (D_{défauts,17} + D_{fenêtre,17} + D_{E2,16,17} + D_{E2,17,18})}{h_e \times S2_{17}}$,

○

M10 : $\dfrac{\rho_{air} \times Cp_{air} \times D_{E2,17,18}}{h_e \times S2_{17}}$,

o

M11 : $\dfrac{h_i \times S_{P18} + \rho_{air} \times Cp_{air} \times (D_{défauts,18} + D_{fenêtre,18})}{h_e \times S1_{18}}$,

o

M12 : $\dfrac{h_i \times S_{P18} + \rho_{air} \times Cp_{air} \times (D_{défauts,18} + D_{E1,17,18} + D_{fenêtre,18})}{h_e \times S1_{18}}$,

o

M13 : $\dfrac{h_i \times S_{P18} + \rho_{air} \times Cp_{air} \times (D_{défauts,18} + D_{E2,17,18} + D_{fenêtre,18})}{h_e \times S2_{18}}$,

o

M14 : $\dfrac{h_i \times S_{P16} + \rho_{air} \times Cp_{air} \times (D_{défauts,16} + D_{fenêtre,16})}{h_e \times S2_{16}}$,

o

M15 : $\dfrac{h_i \times S_{P17} + \rho_{air} \times Cp_{air} \times (D_{défauts,17} + D_{fenêtre,17})}{h_e \times S1_{17}}$,

o

M16 : $\dfrac{h_i \times S_{P18} + \rho_{air} \times Cp_{air} \times (D_{défauts,18} + D_{fenêtre,18})}{h_e \times S2_{18}}$,

o

M17 : $\dfrac{\rho_{air} \times Cp_{air} \times D_{E1,16,17}}{h_e \times S1_{17}}$,

o

M18 : $\dfrac{\rho_{air} \times Cp_{air} \times D_{E2,16,17}}{h_e \times S2_{17}}$,

o

M19 : $\dfrac{\rho_{air} \times Cp_{air} \times D_{E1,17,18}}{h_e \times S1_{18}}$,

o

M20 : $\dfrac{\rho_{air} \times Cp_{air} \times D_{E2,17,18}}{h_e \times S2_{18}}$,

o

- pour la troisième architecture envisagée :

M1 : $\dfrac{h_i \times S_{P16} + \rho_{air} \times Cp_{air} \times (D_{défauts,16} + D_{fenêtre,16} + D_{transfert,16})}{h_e \times S1_{16}}$,

o

M2 : $\dfrac{h_i \times S_{P16} + \rho_{air} \times Cp_{air} \times (D_{défauts,16} + D_{E1,16,17} + D_{fenêtre,16} + D_{transfert,16})}{h_e \times S1_{16}}$,

o

M3 : $\dfrac{\rho_{air} \times Cp_{air} \times D_{E1,16,17}}{h_e \times S1_{16}}$,

o

M4 : $\dfrac{h_i \times S_{P16} + \rho_{air} \times Cp_{air} \times (D_{défauts,16} + D_{E2,16,17} + D_{fenêtre,16} + D_{transfert,16})}{h_e \times S2_{16}}$,

o

M5 : $\dfrac{\rho_{air} \times Cp_{air} \times D_{E2,16,17}}{h_e \times S2_{16}}$,

o

M6 : $\dfrac{h_i \times S_{P17} + \rho_{air} \times Cp_{air} \times (D_{défauts,17} + D_{fenêtre,17} + D_{transfert,17})}{h_e \times S1_{17}}$,

o

M7 : $\dfrac{h_i \times S_{P17} + \rho_{air} \times Cp_{air} \times (D_{défauts,17} + D_{fenêtre,17} + D_{E1,16,17} + D_{E1,17,18} + D_{transfert,17})}{h_e \times S1_{17}}$,

o

M8 : $\dfrac{\rho_{air} \times Cp_{air} \times D_{E1,17,18}}{h_e \times S1_{17}}$,

o

M9 : $\dfrac{h_i \times S_{P17} + \rho_{air} \times Cp_{air} \times (D_{défauts,17} + D_{fenêtre,17} + D_{E2,16,17} + D_{E2,17,18} + D_{transfert,17})}{h_e \times S2_{17}}$,

o

M10 : $\dfrac{\rho_{air} \times Cp_{air} \times D_{E2,17,18}}{h_e \times S2_{17}}$,

o

$$M11 : \frac{h_i \times S_{P18} + \rho_{air} \times Cp_{air} \times (D_{défauts,18} + D_{fenêtre,18} + D_{transfert,18})}{h_e \times S1_{18}},$$

$$M12 : \frac{h_i \times S_{P18} + \rho_{air} \times Cp_{air} \times (D_{défauts,18} + D_{E1,17,18} + D_{fenêtre,18} + D_{transfert,18})}{h_e \times S1_{18}},$$

$$M13 : \frac{h_i \times S_{P18} + \rho_{air} \times Cp_{air} \times (D_{défauts,18} + D_{E2,17,18} + D_{fenêtre,18} + D_{transfert,18})}{h_e \times S2_{18}},$$

$$M14 : \frac{h_i \times S_{P16} + \rho_{air} \times Cp_{air} \times (D_{défauts,16} + D_{fenêtre,16} + D_{transfert,16})}{h_e \times S2_{16}},$$

$$M15 : \frac{h_i \times S_{P17} + \rho_{air} \times Cp_{air} \times (D_{défauts,17} + D_{fenêtre,17} + D_{transfert,17})}{h_e \times S1_{17}},$$

$$M16 : \frac{h_i \times S_{P18} + \rho_{air} \times Cp_{air} \times (D_{défauts,18} + D_{fenêtre,18} + D_{transfert,18})}{h_e \times S2_{18}},$$

$$M17 : \frac{\rho_{air} \times Cp_{air} \times D_{E1,16,17}}{h_e \times S1_{17}},$$

$$M18 : \frac{\rho_{air} \times Cp_{air} \times D_{E2,16,17}}{h_e \times S2_{17}},$$

$$M19 : \frac{\rho_{air} \times Cp_{air} \times D_{E1,17,18}}{h_e \times S1_{18}},$$

$$M20 : \frac{\rho_{air} \times Cp_{air} \times D_{E2,17,18}}{h_e \times S2_{18}},$$

Avec :
- $h_i$ désignant le coefficient d'échange global des parois de séparation 20, ce terme étant typiquement mémorisé dans la mémoire du dispositif 50,
- $\rho_{air}$ désignant la masse volumique de l'air à l'altitude d'installation de l'armoire électrique 1, ce terme étant typiquement calculé à partir de données, entrées par l'opérateur, relatives à l'altitude d'installation de l'armoire 1,
- $Cp_{air}$ désignant la capacité calorifique de l'air, ce terme étant typiquement mémorisé dans la mémoire du dispositif 50,
- $S_{P16}$ désignant la surface de la paroi de séparation 20 du premier module périphérique 16, ce terme étant typiquement calculé à partir des données relatives aux dimensions de l'armoire 1 entrées par l'opérateur,
- $S_{P17}$ désignant la surface de la paroi de séparation 20 du module central 17, ce terme étant typiquement calculé à partir des données relatives aux dimensions de l'armoire 1 entrées par l'opérateur,
- $S_{P18}$ désignant la surface de la paroi de séparation 20 du deuxième module périphérique 18, ce terme étant typiquement calculé à partir des données relatives aux dimensions de l'armoire 1 entrées par l'opérateur,
- $D_{défauts,16}$ désignant le débit d'air passant au travers des défauts de la paroi de séparation 20 du premier module périphérique 16, ce terme étant typiquement calculé à partir des données relatives aux dimensions de l'armoire 1 et aux unités fonctionnelles installées dans l'armoire 1 entrées par l'opérateur,
- $D_{défauts,17}$ désignant le débit d'air passant au travers des défauts de la paroi de séparation 20 du module central 17, ce terme étant typiquement calculé à partir des données relatives aux dimensions de l'armoire 1 et aux unités fonctionnelles installées dans l'armoire 1 entrées par l'opérateur,
- $D_{défauts,18}$ désignant le débit d'air passant au travers des défauts de la paroi de séparation 20 du deuxième module périphérique 18, ce terme étant typiquement calculé à partir des données relatives aux dimensions de l'armoire 1 et aux unités fonctionnelles installées dans l'armoire 1 entrées par l'opérateur,
- $D_{fenêtre,16}$ désignant le débit d'air passant à travers la fenêtre 29 laissée libre dans le plan de séparation P du premier module périphérique 16, ce terme étant typiquement calculé à partir des données relatives aux dimensions de l'armoire 1 entrées par l'opérateur,
- $D_{fenêtre,17}$ désignant le débit d'air passant à travers la fenêtre 29 laissée libre dans le plan de séparation P du module central 17, ce terme étant typiquement calculé à partir des données relatives aux dimensions de l'armoire 1 entrées par l'opérateur,
- $D_{fenêtre,18}$ désignant le débit d'air passant à travers la fenêtre 29 laissée libre dans le plan de séparation P du deuxième module périphérique 18, ce terme étant typiquement calculé à partir des données relatives aux dimensions de l'armoire 1 entrées par l'opérateur,
- $D_{transfert,16}$ désignant le débit d'air ventilé par le ventilateur 26b de l'unité fonctionnelle de ventilation 22b installée dans la paroi de séparation 20 du premier module périphérique 16, ce terme étant typiquement mémorisé dans la mémoire du dispositif 50,

- $D_{transfert,17}$ désignant le débit d'air ventilé par le ventilateur 26b de l'unité fonctionnelle de ventilation 22b installée dans la paroi de séparation 20 du module central 17, ce terme étant typiquement mémorisé dans la mémoire du dispositif 50,
- $D_{transfert,18}$ désignant le débit d'air ventilé par le ventilateur 26b de l'unité fonctionnelle de ventilation 22b installée dans la paroi de séparation 20 du deuxième module périphérique 18, ce terme étant typiquement mémorisé dans la mémoire du dispositif 50,
- $D_{E1,16,17}$ désignant le débit d'air échangé entre les premiers espaces E1 du premier module périphérique 16 et du module central 17, ce terme étant typiquement calculé à partir des données relatives aux dimensions de l'armoire 1 entrées par l'opérateur,
- $D_{E2,16,17}$ désignant le débit d'air échangé entre les deuxièmes espaces E2 du premier module périphérique 16 et du module central 17, ce terme étant typiquement calculé à partir des données relatives aux dimensions de l'armoire 1 entrées par l'opérateur,
- $D_{E1,17,18}$ désignant le débit d'air échangé entre les premiers espaces E1 du module central 17 et du deuxième module périphérique 18, ce terme étant typiquement calculé à partir des données relatives aux dimensions de l'armoire 1 entrées par l'opérateur, et
- $D_{E2,17,18}$ désignant le débit d'air échangé entre les deuxièmes espaces E2 du module central 17 et du deuxième module périphérique 18, ce terme étant typiquement calculé à partir des données relatives aux dimensions de l'armoire 1 entrées par l'opérateur.

L'opération de comparaison comprend, pour chacune des architectures envisagées, la comparaison de chaque température de fonctionnement calculée $T1_{16}$, $T2_{16}$, $T1_{17}$, $T2_{17}$, $T1_{18}$, $T2_{18}$ pour chaque premier et deuxième espace E1, E2 de chaque module 16, 17, 18 avec la température de consigne $T1_c$, $T2_c$ pour ledit premier ou deuxième espace E1, E2 dudit module 16, 17, 18.

L'opération de détermination comprend la détermination de chaque architecture envisagée pour laquelle chacune des températures de fonctionnement calculées $T1_{16}$, $T2_{16}$, $T1_{17}$, $T2_{17}$, $T1_{18}$, $T2_{18}$ est inférieure à la température de consigne $T1_c$, $T2_c$ avec laquelle elle est comparée lors de l'opération de comparaison comme étant une architecture dite passive.

Le deuxième organe de recherche 54 est programmé pour rechercher, en l'absence d'identification d'une architecture dite passive, à partir des données relatives à l'armoire électrique 1, parmi la pluralité d'architectures envisagées, une architecture dite économe pour laquelle les températures de consigne prédéterminées $T1_c$, $T2_c$ pour chacun des premier et deuxième espaces E1, E2 de chaque module 16, 17, 18 sont atteintes par injection, dans le premier espace E1 d'au moins un des modules 16, 17, 18, d'une puissance frigorifique minimale. Par « injection d'une puissance frigorifique », on comprend l'apport, en un emplacement donné de l'armoire électrique 1, d'une puissance ayant pour effet de refroidir ledit emplacement de l'armoire électrique ; une telle puissance frigorifique est ainsi typiquement constituée par un flux d'air qui est à une température inférieure à la température de l'emplacement dans lequel la puissance frigorifique est injectée. Par « puissance frigorifique minimale », on comprend que cette puissance frigorifique est minimale parmi les puissances frigorifiques nécessaires à l'atteinte des températures de consigne $T1_c$, $T2_c$ dans chacune des architectures envisagées.

A cet effet, le deuxième organe de recherche 54 est programmé pour l'exécution des opérations suivantes :

- calcul, à partir des données relatives à l'armoire électrique 1, pour chaque architecture de la pluralité d'architectures envisagées, d'une puissance frigorifique à injecter dans le premier espace E1 d'au moins un des modules 16, 17, 18 pour atteindre les températures de consigne prédéterminées $T1_c$, $T2_c$ dans chacun des premier et deuxième espaces E1, E2 de chaque module 16, 17, 18,
- comparaison des puissances frigorifiques à injecter pour chaque architecture envisagée avec la puissance frigorifique à injecter pour chaque autre architecture envisagée, la puissance frigorifique à injecter la plus faible constituant la puissance frigorifique minimale, et
- détermination de l'architecture dite économe comme étant l'architecture envisagée pour laquelle la puissance frigorifique à injecter est la puissance frigorifique minimale.

En particulier, l'opération de calcul comprend :

- un premier calcul, pour chacune des architectures envisagées et pour chacun des premier et deuxième espaces E1, E2 de chaque module 16, 17, 18, d'une puissance frigorifique locale $\phi f_{E1,16}$, $\phi f_{E2,16}$, $\phi f_{E1,17}$, $\phi f_{E2,17}$, $\phi f_{E1,18}$, $\phi f_{E2,18}$ devant être injectée dans ledit espace E1, E2 pour atteindre la température de consigne $T1_c$, $T2_c$ pour ledit espace E1, E2,

- un deuxième calcul d'une puissance frigorifique globale $\phi$g par addition des puissances frigorifiques locales $\phi f_{E1,16}$, $\phi f_{E2,16}$, $\phi Df_{E1,17}$, $\phi f_{E2,17'}$ <$Df_{E1,18}$, $\phi Df_{E2,18}$ calculées lors du premier calcul,
- une détermination, parmi les modules 16, 17, 18, d'un ou de module(s) d'injection de la puissance frigorifique, dans le(s)quel(s) injecter la puissance frigorifique, en fonction de la puissance frigorifique globale $\phi$g calculée lors du deuxième calcul, ladite détermination comprenant de préférence la détermination du module central 17 comme module d'injection de la puissance frigorifique lorsque la puissance frigorifique globale $\phi$g est strictement inférieure à une valeur prédéterminée, par exemple 3500 Watts, et la détermination des modules périphériques 16, 18 comme modules d'injection de la puissance frigorifique lorsque la puissance frigorifique globale $\phi$g est supérieure à ladite valeur prédéterminée,
- un troisième calcul, pour chacune des architectures envisagées, à partir des données relatives à l'armoire électrique 1 et en simulant l'injection d'une puissance frigorifique simulée $\phi f_{sim}$ dans le premier espace E1 du ou de chaque module d'injection de la puissance frigorifique, des températures de fonctionnement $T1_{16}$, $T2_{16}$, $T1_{17}$, $T2_{17}$, $T1_{18}$, $T2_{18}$ dans chacun des premier et deuxième espaces E1, E2 de chaque module 16, 17, 18, la puissance frigorifique simulée $\phi f_{sim}$ étant égale à la puissance frigorifique globale $\phi$g lors de la première itération du troisième calcul pour chaque architecture envisagée,
- une comparaison, pour chacune des architectures envisagées, de chacune des températures de fonctionnement calculées $T1_{16}$, $T2_{16}$, $T1_{17}$, $T2_{17}$, $T1_{18}$, $T2_{18}$ pour chaque premier et deuxième espace E1, E2 de chaque module 16, 17, 18 avec la température de consigne $T1_c$, $T2_c$ pour ledit premier ou deuxième espace E1, E2 dudit module 16, 17, 18,
- une réitération du troisième calcul et de la comparaison, sur la base d'une nouvelle puissance frigorifique simulée $\phi f_{sim}(N+1)$ de valeur supérieure à une ancienne puissance frigorifique simulée $\phi_{sim}(N)$ sur la base de laquelle les températures $T1_{16}$, $T2_{16}$, $T1_{17}$, $T2_{17}$, $T1_{18}$, $T2_{18}$ ont été calculées à la précédente itération du troisième calcul et de la comparaison, la nouvelle puissance frigorifique simulée $\phi f_{sim}(N+1)$ étant de préférence égale à l'ancienne puissance frigorifique simulée $\phi f_{sim}(N)$ augmentée d'un pas prédéterminé, ledit pas étant par exemple égal à 5 Watts, jusqu'à ce que chaque température de fonctionnement calculée $T1_{16}$, $T2_{16}$, $T1_{17}$, $T2_{17}$, $T1_{18}$, $T2_{18}$ soit inférieure à la température de consigne $T1_c$, $T2_c$ à laquelle elle est comparée, et
- une détermination, pour chacune des architectures envisagées, de la puissance frigorifique à injecter pour ladite architecture envisagée comme étant la puissance frigorifique simulée $\phi f_{sim}$ employée à la dernière itération du troisième calcul et de la comparaison.

De préférence, le premier calcul comprend la résolution, pour chaque architecture envisagée, de l'équation matricielle suivante :

$$\text{e2: } \vec{\Phi} = \bar{\bar{A}} \times (\bar{\bar{M}} - \bar{I}) \times \vec{T_c} + \bar{B} \times \vec{V}$$

$$\vec{\Phi} = \begin{pmatrix} \Phi f_{E1,16} \\ \Phi f_{E2,16} \\ \Phi f_{E1,17} \\ \Phi f_{E2,17} \\ \Phi f_{E1,18} \\ \Phi f_{E2,18} \end{pmatrix}, \quad \bar{\bar{A}} = \begin{pmatrix} A1 & 0 & 0 & 0 & 0 & 0 \\ 0 & A2 & 0 & 0 & 0 & 0 \\ 0 & 0 & A3 & 0 & 0 & 0 \\ 0 & 0 & 0 & A4 & 0 & 0 \\ 0 & 0 & 0 & 0 & A5 & 0 \\ 0 & 0 & 0 & 0 & 0 & A6 \end{pmatrix}, \quad \vec{T_c} = \begin{pmatrix} T1_{c,16} \\ T2_{c,16} \\ T1_{c,17} \\ T2_{c,17} \\ T1_{c,18} \\ T2_{c,18} \end{pmatrix},$$

Avec $\bar{B}$ = (B1 B2 B3 B4 B5 B6), $\bar{I}$ est la matrice identité et $\bar{\bar{M}}$ et $\vec{V}$ sont les matrices définies à l'équation.
Où:

- $T1_{c,16}$ désigne la température de consigne pour le premier espace E1 du premier module périphérique 16, la valeur de cette température de consigne étant typiquement entrée par l'opérateur,
- $T2_{c,16}$ désigne la température de consigne pour le deuxième espace E2 du premier module périphérique 16, la valeur de cette température de consigne étant typiquement entrée par l'opérateur,
- $T1_{c,17}$ désigne la température de consigne pour le premier espace E1 du module central 17, la valeur de cette température de consigne étant typiquement entrée par l'opérateur,
- $T2_{c,17}$ désigne la température de consigne pour le deuxième espace E2 du module central 17, la valeur de cette température de consigne étant typiquement entrée par l'opérateur,
- $T1_{c,18}$ désigne la température de consigne pour le premier espace E1 du deuxième module périphérique 18, la valeur de cette température de consigne étant typiquement entrée par l'opérateur,

- $T2_{c,18}$ désigne la température de consigne pour le deuxième espace E2 du deuxième module périphérique 18, la valeur de cette température de consigne étant typiquement entrée par l'opérateur,
- les inconnues sont $\phi f_{E1,16}$, $\phi f_{E2,16}$, $\phi f_{E1,17}$, $\phi f_{E2,17}$, $\phi f_{E1,18}$, $\phi f_{E2,18}$, et désignent respectivement :

  o la puissance frigorifique locale devant être injectée dans le premier espace E1 du premier module périphérique 16 pour atteindre la température de consigne $T1_{c,16}$,
  o la puissance frigorifique locale devant être injectée dans le deuxième espace E2 du premier module périphérique 16 pour atteindre la température de consigne $T2_{c,16}$,
  o la puissance frigorifique locale devant être injectée dans le premier espace E1 du module central 17 pour atteindre la température de consigne $T1_{c,17}$,
  o la puissance frigorifique locale devant être injectée dans le deuxième espace E2 du module central 17 pour atteindre la température de consigne $T2_{c,17}$,
  o la puissance frigorifique locale devant être injectée dans le premier espace E1 du deuxième module périphérique 18 pour atteindre la température de consigne $T1_{c,18}$,
  o la puissance frigorifique locale devant être injectée dans le deuxième espace E2 du deuxième module périphérique 18 pour atteindre la température de consigne $T2_{c,18}$, et

- les termes A1, A2, A3, A4, A5, A6, B1, B2, B3, B4, B5 et B6 sont des coefficients fixes dépendant de caractéristiques dimensionnelles de l'armoire électrique 1.

A titre d'exemple, les termes A1, A2, A3, A4, A5, A6, B1, B2, B3, B4, B5 et B6 sont égaux à :

- $A1 = B1 = h_e \times S1_{16}$
- $A2 = B2 = h_e \times S2_{16}$
- $A3 = B3 = h_e \times S1_{17}$
- $A4 = B4 = h_e \times S2_{17}$
- $A5 = B5 = h_e \times S1_{18}$
- $A6 = B6 = h_e \times S2_{18}$

Avantageusement, le troisième calcul comprend la résolution, pour chaque architecture envisagée, de l'une des équations matricielles suivantes :

$$
e3: \begin{pmatrix} T1_{16} \\ T2_{16} \\ T1_{17} \\ T2_{17} \\ T1_{18} \\ T2_{18} \end{pmatrix} = \left( \bar{I} - \begin{pmatrix} -M2 & M1 & M3 & 0 & 0 & 0 \\ M14 & -M4 & 0 & M5 & 0 & 0 \\ M17 & 0 & -M7 & M6 & M8 & 0 \\ 0 & M18 & M15 & -M9 & 0 & M10 \\ 0 & 0 & M19 & 0 & -M12 & M11 \\ 0 & 0 & 0 & M20 & M16 & -M13 \end{pmatrix} \right)^{-1} \times \begin{pmatrix} V1 \\ V2 \\ V3 - \frac{\Phi f_{sim}}{A3} \\ V4 \\ V5 \\ V6 \end{pmatrix}
$$

$$
e4: \begin{pmatrix} T1_{16} \\ T2_{16} \\ T1_{17} \\ T2_{17} \\ T1_{18} \\ T2_{18} \end{pmatrix} = \left( \bar{I} - \begin{pmatrix} -M2 & M1 & M3 & 0 & 0 & 0 \\ M14 & -M4 & 0 & M5 & 0 & 0 \\ M17 & 0 & -M7 & M6 & M8 & 0 \\ 0 & M18 & M15 & -M9 & 0 & M10 \\ 0 & 0 & M19 & 0 & -M12 & M11 \\ 0 & 0 & 0 & M20 & M16 & -M13 \end{pmatrix} \right)^{-1} \times \begin{pmatrix} V1 - \frac{\Phi f_{sim}/2}{A1} \\ V2 \\ V3 \\ V4 \\ V5 - \frac{\Phi f_{sim}/2}{A5} \\ V6 \end{pmatrix}
$$

Où les inconnues sont $T1_{16}$, $T1_{16}$, $T1_{17}$, $T2_{17}$, $T1_{18}$, $T2_{18}$, et où les différents termes ont les mêmes significations que pour l'équation e1.

Le troisième calcul est en particulier constitué par la résolution de l'équation e3 en cas de détermination du module central 17 comme module d'injection de la puissance frigorifique, et par la résolution de l'équation e4 en cas de détermination des modules périphériques 16, 18 comme modules d'injection de la puissance frigorifique.

L'organe de sélection 55 est programmé pour sélectionner la ou l'une des architecture(s) dite(s) passive(s) en cas d'identification d'une architecture dite passive par le premier organe de recherche 52, et pour sélectionner l'architecture dite économe en l'absence d'identification d'une architecture dite passive par le premier organe de recherche 52.

L'organe de calcul 56 est programmé pour calculer, pour l'architecture sélectionnée, à partir des données relatives à l'armoire électrique 1, et en simulant le cas échéant l'injection de la puissance frigorifique à injecter dans le premier espace E1 du ou de chaque module d'injection de puissance frigorifique, de la première température moyenne de fonctionnement $T1_{moy}$ dans les premiers espaces E1 des modules 16, 17, 18 et de la deuxième température moyenne de fonctionnement $T2_{moy}$ dans les deuxièmes espaces E2 des modules 16, 17, 18.

L'organe de génération 58 est propre à générer une image présentant la puissance frigorifique minimale, le ou les modules d'injection de la puissance frigorifique, l'architecture sélectionnée, et les températures moyennes $T1_{moy}$, $T2_{moy}$ calculées pour ladite architecture sélectionnée.

L'organe d'affichage 59 est apte à afficher l'image générée par l'organe 58. A cet effet, l'organe d'affichage 59 comporte par exemple un écran.

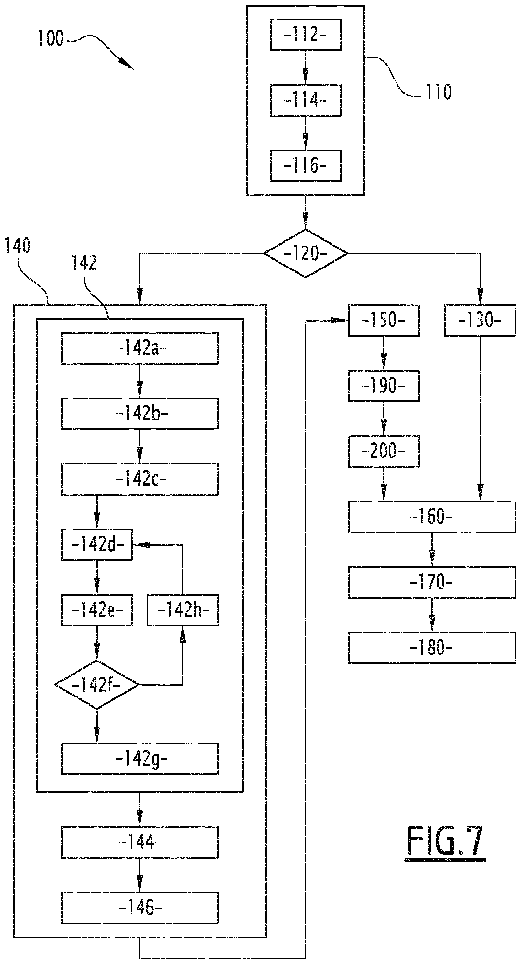

Un procédé 100 mis en oeuvre par le dispositif de sélection 50 va maintenant être décrit, en référence à la Figure 7.

Le procédé 100 comprend une première étape 110 de recherche d'une architecture dite passive, une étape 120 de vérification de l'identification d'au moins une architecture dite passive, et

- en cas d'identification d'une architecture dite passive, une étape 130 de sélection de l'architecture dite passive, ou de l'une des architectures dites passives, et
- en l'absence d'identification d'une architecture dite passive, une deuxième étape 140 de recherche d'une architecture dite économe, et une étape 150 de sélection de l'architecture dite économe.

Le procédé 100 comprend en outre une étape 160 d'affichage de l'architecture sélectionnée, une étape 170 de calcul des première et deuxième températures moyennes de fonctionnement $T1_{moy}$, $T2_{moy}$ pour l'architecture sélectionnée, et une étape 180 d'affichage des températures moyennes de fonctionnement $T1_{moy}$, $T2_{moy}$ calculées.

La première étape de recherche 110 est mise en oeuvre par le premier organe de recherche 52. Elle comprend les sous-étapes suivantes :

- une première sous-étape 112 de calcul, à partir des données relatives à l'armoire électrique 1, de la température de fonctionnement T1, T2 à l'intérieur de chaque premier et deuxième espace E1, E2 de chaque module 16, 17, 18, pour chaque architecture envisagée,
- une deuxième sous-étape 114 de comparaison des températures de fonctionnement T1, T2 calculées avec les températures de consigne $T1_c$, $T2_c$, pour chaque architecture envisagée, et
- une troisième sous-étape 116 de détermination de la ou chaque architecture dite passive.

La première sous-étape 112 comprend la résolution, pour chaque architecture envisagée, de l'équation matricielle e1.

La deuxième sous-étape 114 comprend, pour chacune des architectures envisagées, la comparaison de chaque température de fonctionnement calculée $T1_{16}$, $T2_{16}$, $T1_{17}$, $T1_{17}$, $T1_{18}$, $T2_{18}$ pour chaque premier et deuxième espace E1, E2 de chaque module 16, 17, 18 avec la température de consigne $T1_c$, $T2_c$ pour ledit premier ou deuxième espace E1, E2 dudit module 16, 17, 18.

La troisième sous-étape 116 comprend la détermination de chaque architecture envisagée pour laquelle chacune des températures de fonctionnement calculées $T1_{16}$, $T2_{16}$, $T1_{17}$, $T2_{17}$, $T1_{18}$, $T2_{18}$ est inférieure à la température de consigne $T1_c$, $T2_c$ avec laquelle elle est comparée lors de la deuxième sous-étape 114 comme étant une architecture dite passive.

L'étape de vérification 120 comprend la vérification de l'existence d'une architecture dite passive identifiée lors de la première étape de recherche 110. Elle conduit, en cas de résultat positif, à la mise en oeuvre de l'étape 130 et, en cas de résultat négatif, à la mise en oeuvre de l'étape 140.

L'étape de sélection 130 est mise en oeuvre par l'organe de sélection 55.

La deuxième étape de recherche 140 est mise en oeuvre par le deuxième organe de recherche 54. Elle comprend les sous-étapes suivantes :

- une première sous-étape 142 de calcul, à partir des données relatives à l'armoire électrique 1, pour chaque architecture de la pluralité d'architectures envisagées, d'une puissance frigorifique à injecter dans le premier espace E1 d'au moins un des modules 16, 17, 18 pour atteindre les températures de consigne prédéterminées $T1_c$, $T2_c$ dans chacun des premier et deuxième espaces E1, E2 de chaque module 16, 17, 18,
- une deuxième sous-étape 144 de comparaison des puissances frigorifiques à injecter pour chaque architecture envisagée avec la puissance frigorifique à injecter pour chaque autre architecture envisagée, la puissance frigorifique à injecter la plus faible constituant la puissance frigorifique minimale, et
- une troisième sous-étape 146 de détermination de l'architecture dite économe comme étant l'architecture envisagée pour laquelle la puissance frigorifique à injecter est la puissance frigorifique minimale.

La première sous-étape 142 comprend les sous-étapes suivantes :

- une première sous-étape 142a de calcul, pour chacune des architectures envisagées et pour chacun des premier et deuxième espaces E1, E2 de chaque module 16, 17, 18, d'une puissance frigorifique locale $\Phi f_{E1,16}$, $\Phi f_{E2,16}$, $\Phi f_{E1,17}$, $\Phi f_{E2,17}$, $\Phi f_{E1,18}$, $\Phi f_{E2,18}$, devant être injectée dans ledit espace E1, E2 pour atteindre la température de consigne $T1_c$, $T2_c$ pour ledit espace E1, E2,
- une deuxième sous-étape 142b de calcul d'une puissance frigorifique globale $\Phi g$,
- une troisième sous-étape 142c de détermination, parmi les modules 16, 17, 18, d'un ou de module(s) d'injection de la puissance frigorifique, dans le(s)quel(s) injecter la puissance frigorifique, en fonction de la puissance frigorifique globale $\Phi g$ calculée lors du deuxième calcul,
- une quatrième sous-étape 142d de calcul des températures de fonctionnement $T1_{16}$, $T2_{16}$, $T1_{17}$, $T2_{17}$, $T1_{18}$, $T2_{18}$ dans chacun des premier et deuxième espaces E1, E2 de chaque module 16, 17, 18 en cas de refroidissement de l'armoire 1,
- une cinquième sous-étape 142e de comparaison, pour chacune des architectures envisagées, de chacune des températures de fonctionnement calculées $T1_{16}$, $T2_{16}$, $T1_{17}$, $T2_{17}$, $T1_{18}$, $T2_{18}$ pour chaque premier et deuxième espace E1, E2 de chaque module 16, 17, 18 avec la température de consigne $T1_c$, $T2_c$ pour ledit premier ou deuxième espace E1, E2 dudit module 16, 17, 18, et
- une sixième sous-étape 142f de vérification de la présence d'au moins une température calculée $T1_{16}$, $T2_{16}$, $T1_{17}$, $T2_{17}$, $T1_{18}$, $T2_{18}$ pour un premier ou deuxième espace E1, E2 de l'un des modules 16, 17, 18 de valeur supérieure à la température de consigne $T1_c$, $T2_c$ pour ledit premier ou deuxième espace E1, E2 dudit module 16, 17, 18, et
- une septième sous-étape 142g de détermination, pour chacune des architectures envisagées, de la puissance frigorifique à injecter pour ladite architecture envisagée.

La sous-étape 142 comprend également, en cas de présence d'au moins une température calculée $T1_{16}$, $T2_{16}$, $T1_{17}$, $T2_{17}$, $T1_{18}$, $T2_{18}$ pour un premier ou deuxième espace E1, E2 de l'un des modules 16, 17, 18 de valeur supérieure à la température de consigne $T1_c$, $T2_c$ pour ledit premier ou deuxième espace E1, E2 dudit module 16, 17, 18, une sous-étape 142h de réitération des quatrième, cinquième et sixième sous-étapes 142d, 142e, 142f. Cette sous-étape de réitération 142h est renouvelée jusqu'à ce que chaque température de fonctionnement calculée $T1_{16}$, $T2_{16}$, $T1_{17}$, $T2_{17}$, $T1_{18}$, $T2_{18}$ ait une valeur inférieure à la valeur de la température de consigne $T1_c$, $T2_c$ à laquelle elle est comparée

La première sous-étape 142a consiste typiquement en la résolution de l'équation e2.

Lors de la deuxième sous-étape 142b, la puissance globale $\Phi g$ est calculée par addition des puissances frigorifiques locales $\Phi f_{E1,16}$, $\Phi f_{E2,16}$, $\Phi f_{E1,17}$, $\Phi f_{E2,17}$, $\Phi f_{E1,18}$, $\Phi f_{E2,18}$, calculées lors de la première sous-étape 142a.

Lors de la troisième sous-étape 142c, est déterminé comme module d'injection de la puissance frigorifique :

- le module central 17 lorsque la puissance frigorifique globale $\Phi g$ est strictement inférieure à une valeur prédéterminée, par exemple 3500 Watts, et
- chacun des modules périphériques 16, 18 lorsque la puissance frigorifique globale $\Phi g$ est supérieure à ladite valeur prédéterminée.

Lors de la quatrième sous-étape 142d, les températures de fonctionnement $T1_{16}$, $T2_{16}$, $T1_{17}$, $T1_{17}$, $T1_{18}$, $T2_{18}$ sont calculées pour chacune des architectures envisagées, à partir des données relatives à l'armoire électrique 1 et en simulant l'injection d'une puissance frigorifique simulée $\Phi f_{sim}$ dans le premier espace E1 du ou de chaque module d'injection de la puissance frigorifique. Cette puissance frigorifique simulée $\Phi f_{sim}$ est prise égale à la puissance frigorifique globale $\Phi g$ lors de la première itération de la quatrième sous-étape 142d pour chaque architecture envisagée, et est prise égale, à chaque réitération de la quatrième sous-étape 142d, à une nouvelle puissance frigorifique simulée $\Phi f_{sim}(N+1)$ de valeur supérieure à une ancienne puissance frigorifique simulée $\Phi f_{sim}(N)$ sur la base de laquelle les températures $T1_{16}$, $T2_{16}$, $T1_{17}$, $T1_{17}$, $T1_{18}$, $T2_{18}$ ont été calculées à la précédente itération de la quatrième sous-étapes 142d. La nouvelle puissance frigorifique simulée $\Phi f_{sim}(N+1)$ est de préférence égale à l'ancienne puissance frigorifique simulée $\Phi f_{sim}(N)$ augmentée d'un pas prédéterminé, ledit pas étant par exemple égal à 5 Watts.

La quatrième sous-étape 142d comprend typiquement la résolution de l'équation e3 lorsque le module d'injection de la puissance frigorifique déterminé lors de la sous-étape 142c est le module central 17, et la résolution de l'équation e4 lorsque les modules d'injection de la puissance frigorifique déterminés lors de la sous-étape 142c sont les modules périphériques 16, 18.

Lors de la septième sous-étape 142g, la puissance frigorifique à injecter est déterminée comme étant la puissance frigorifique simulée $\Phi f_{sim}$ employée à la dernière itération de la quatrième sous-étape 142d.

L'étape de sélection 150 est mise en oeuvre par l'organe de sélection 55.

L'étape d'affichage 160 comprend la génération, par l'organe de génération 58, d'une image présentant l'architecture sélectionnée, et l'affichage de cette image par l'organe d'affichage 59.

L'étape de calcul 170 est mise en oeuvre par l'organe de calcul 56. Elle comprend, en l'absence d'identification d'une architecture dite passive, une simulation de l'injection, dans le premier espace E1 du ou de chaque module d'injection de puissance frigorifique déterminé à la sous-étape 142c, de la puissance frigorifique à injecter déterminée lors de la sous-étape 142g.

L'étape d'affichage 180 comprend la génération, par l'organe de génération 58, d'une image présentant les températures moyennes de fonctionnement $T1_{moy}$, $T2_{moy}$ calculées lors de l'étape 170, et l'affichage de cette image par l'organe d'affichage 59.

Le procédé 100 comprend également, en l'absence d'identification d'une architecture dite passive, une étape 190 d'affichage de la puissance frigorifique minimale déterminé à la sous-étape 144, et une étape 200 d'affichage du ou des module(s) d'injection de la puissance frigorifique déterminé(s) à la sous-étape 142c.

L'étape d'affichage 190 comprend la génération, par l'organe de génération 58, d'une image présentant la puissance frigorifique minimale déterminée à la sous-étape 144, et l'affichage de cette image par l'organe d'affichage 59.

L'étape d'affichage 200 comprend la génération, par l'organe de génération 58, d'une image présentant le ou les module(s) d'injection de la puissance frigorifique déterminé(s) à la sous-étape 142c, et l'affichage de cette image par l'organe d'affichage 59.

Grâce à l'invention décrite ci-dessus, la sélection d'une architecture de l'armoire électrique 1 se fait aisément. Il est ainsi possible de réduire facilement la consommation électrique de l'armoire 1 en choisissant pour la réaliser une architecture qui minimisera la puissance frigorifique nécessaire à la régulation des températures moyennes de fonctionnement $T1_{moy}$, $T2_{moy}$.

On notera que l'invention a été décrite pour une armoire électrique comprenant trois modules. L'invention s'étend cependant à toute armoire électrique comprenant un nombre quelconque de modules, ce nombre pouvant être égal à un, à deux, ou pouvant être supérieur à trois.

L'homme du métier saura sans peine adapter les équations e1, e2, e3 et e4 divulguées ci-dessus aux cas où le nombre de modules de l'armoire électrique est différent de trois. A titre d'exemple, les matrices $\vec{T}, \overline{\overline{M}}, \vec{V}, \vec{\Phi}, \overline{\overline{A}}, \vec{T_c}, \overline{B}$ s'écrivent respectivement :

- dans le cas où l'armoire électrique 1 comprend le seul module 17 :

$$\vec{T} = \begin{pmatrix} T1_{17} \\ T2_{17} \end{pmatrix},$$

$$\overline{\overline{M}} = \begin{pmatrix} -M'1 & M'2 \\ M'3 & -M'4 \end{pmatrix},$$ où M'1, M'2, M'3 et M'4 sont des coefficients fixes dont les valeurs dépendent des dimensions de l'armoire électrique 1 et des unités fonctionnelles installées dans l'armoire électrique 1,

$$\vec{V} = \begin{pmatrix} V3 \\ V4 \end{pmatrix},$$

$$\vec{\Phi} = \begin{pmatrix} \Phi f_{E1,17} \\ \Phi f_{E2,17} \end{pmatrix},$$

$$\overline{\overline{A}} = \begin{pmatrix} A3 & 0 \\ 0 & A4 \end{pmatrix},$$

$$\vec{T_c} = \begin{pmatrix} T1_{c,17} \\ T2_{c,17} \end{pmatrix},$$ et

$$\overline{B} = (B3 \ B4),$$

- dans le cas où l'armoire électrique 1 comprend les seuls modules 16 et 17 :

$$\vec{T} = \begin{pmatrix} T1_{16} \\ T2_{16} \\ T1_{17} \\ T2_{17} \end{pmatrix},$$

$$\overline{\overline{M}} = \begin{pmatrix} -M''2 & M''1 & M''3 & 0 \\ M''8 & -M''4 & 0 & M''5 \\ M''10 & 0 & -M''7 & M''6 \\ 0 & M''11 & M''12 & -M''9 \end{pmatrix},$$ où M"1, M"2, M"3, M"4, M"5, M"6, M"7, M"8, M"9, M"10, M"11 et M"12 sont des coefficients fixes dont les valeurs dépendent des dimensions de l'armoire électrique 1 et des unités fonctionnelles installées dans l'armoire électrique 1,

$$\vec{V} = \begin{pmatrix} V1 \\ V2 \\ V3 \\ V4 \end{pmatrix}$$

$$\vec{\Phi} = \begin{pmatrix} \Phi f_{E1,16} \\ \Phi f_{E2,16} \\ \Phi f_{E1,17} \\ \Phi f_{E2,17} \end{pmatrix},$$

$$\bar{\bar{A}} = \begin{pmatrix} A1 & 0 & 0 & 0 \\ 0 & A2 & 0 & 0 \\ 0 & 0 & A3 & 0 \\ 0 & 0 & 0 & A4 \end{pmatrix},$$

$$\vec{T_c} = \begin{pmatrix} T1_{c,16} \\ T2_{c,16} \\ T1_{c,17} \\ T2_{c,17} \end{pmatrix}, \quad \text{et}$$

$\circ$ $\bar{B}$ = ($B1$ $B2$ $B3$ $B4$).

## Revendications

1. Procédé (100) de sélection d'une architecture d'armoire électrique (1), ladite armoire électrique (1) comprenant au moins un module (16, 17, 18) dans lequel sont logées une pluralité d'unités fonctionnelles électriques (22a), lesdites unités fonctionnelles électriques (22a) étant agencées suivant un plan de séparation (P) du module (16, 17, 18) délimitant :

   - une première zone thermique froide (E1) formée par un premier espace du module (16, 17, 18) situé d'un premier côté du plan de séparation (P), et
   - une seconde zone thermique d'échauffement (E2) formée par un deuxième espace du module (16, 17, 18) situé d'un deuxième côté du plan de séparation (P),

   **caractérisé en ce que** le procédé (100) est mis en oeuvre par ordinateur et comprend les étapes suivantes :

   - recherche (110), à partir de données relatives à l'armoire électrique (1), parmi une pluralité d'architectures envisagées pour l'armoire électrique (1), d'une architecture dite passive pour laquelle la température à l'intérieur de chaque première et deuxième zone thermique (E1, E2) du ou de chaque module (16, 17, 18) est inférieure à une température de consigne prédéterminée pour ladite zone thermique (E1, E2), sans injection d'une puissance frigorifique à l'intérieur de l'armoire (1), et
   - en cas d'identification d'une architecture dite passive :

      o sélection (130) de l'architecture dite passive,

   - en l'absence d'identification d'une architecture dite passive :

      o recherche (140), à partir des données relatives à l'armoire électrique (1), parmi la pluralité d'architectures envisagées (1), d'une architecture dite économe pour laquelle les températures de consigne prédéterminées pour chacune des première et deuxième zones thermiques (E1, E2) du ou de chaque module (16, 17, 18) sont atteintes par injection, dans la première zone thermique (E1) d'au moins un module (16, 17, 18) de l'armoire électrique (1), d'une puissance frigorifique minimale, et
      o sélection (150) de ladite architecture dite économe.

**2.** Procédé de sélection (100) selon la revendication 1, dans lequel l'étape de recherche de l'architecture dite passive (110) comprend les sous-étapes suivantes :

- calcul (112), à partir des données relatives à l'armoire électrique (1), pour chaque architecture de la pluralité d'architectures envisagées, d'une première température de fonctionnement dans la première zone thermique (E1) du ou de chaque module (16, 17, 18) et d'une deuxième température de fonctionnement dans la deuxième zone thermique (E2) du ou de chaque module (16, 17 18),
- comparaison (114) de chacune des première et deuxième températures de fonctionnement calculées avec la température de consigne pour la première ou deuxième zone thermique (E1, E2) correspondante, et
- détermination (116) de chaque architecture pour laquelle chacune des première et deuxième températures calculées est inférieure à la température de consigne pour la première ou deuxième zone thermique (E1, E2) correspondante comme étant une architecture dite passive.

**3.** Procédé de sélection (100) selon la revendication 1 ou 2, dans lequel l'étape de recherche de l'architecture dite économe (140) comprend les sous-étapes suivantes :

- calcul (142), à partir des données relatives à l'armoire électrique (1), pour chaque architecture de la pluralité d'architectures envisagées, d'une puissance frigorifique à injecter dans la première zone thermique (E1) d'au moins un module (16, 17, 18) de l'armoire (1) pour atteindre les températures de consigne prédéterminées dans les première et deuxième zones thermiques (E1, E2) du ou de chaque module (16, 17, 18), et
- comparaison (144) de la puissance frigorifique à injecter pour chaque architecture envisagée avec la puissance frigorifique à injecter pour chaque autre architecture envisagée, la puissance frigorifique à injecter la plus faible constituant la puissance frigorifique minimale.

**4.** Procédé de sélection (100) selon la revendication 3, dans lequel l'étape de calcul de la puissance frigorifique à injecter (142) comprend, pour chaque architecture de la pluralité d'architectures envisagées, les sous-étapes suivantes :

- calcul (142a), à partir des données relatives à l'armoire électrique (1), pour chacune des première et deuxième zones thermiques (E1, E2) du ou de chaque module (16, 17, 18), d'une puissance frigorifique locale devant être injectée dans ladite zone thermique (E1, E2) pour atteindre la température de consigne pour ladite zone thermique (E1, E2),
- calcul (142b) d'une puissance frigorifique globale par addition des puissances frigorifiques locales,
- calcul (142d), à partir des données relatives à l'armoire électrique (1), et en simulant l'injection de la puissance frigorifique globale dans la première zone thermique (E1) d'au moins un module (16, 17, 18) de l'armoire (1), des températures de fonctionnement dans chacune des première et deuxième zones thermiques (E1, E2) du ou de chaque module (16, 17, 18),
- comparaison (142e) de chaque température de fonctionnement calculée avec la température de consigne pour la zone thermique correspondante (E1, E2), et
- dans le cas où chaque température calculée est inférieure à la température de consigne pour la zone thermique correspondante :

   ◦ détermination (142g) de la puissance frigorifique globale comme étant la puissance frigorifique à injecter,

- dans le cas où au moins une température calculée est strictement supérieure à la température de consigne pour la zone thermique correspondante :

   ◦ réitération (142h) des étapes de calcul des températures (142d) et de comparaison des températures (142e) jusqu'à ce que chaque température calculée soit inférieure à la température de consigne pour la zone thermique (E1, E2) correspondante, la simulation de l'injection de la puissance frigorifique globale dans la première zone thermique (E1) d'au moins un module (16, 17,18) de l'armoire (1) étant remplacée, à chaque itération, par la simulation de l'injection, dans ladite première zone thermique (E1), d'une puissance frigorifique d'intensité supérieure à l'intensité de la puissance frigorifique dont l'injection a été simulée à l'itération précédente, et
   ◦ détermination (142g) de la puissance frigorifique dont l'injection a été simulée à la dernière itération comme étant la puissance frigorifique à injecter.

**5.** Procédé de sélection (100) selon l'une quelconque des revendications précédentes, dans lequel l'armoire (1) comprend une pluralité de modules (16, 17, 18) accolés les uns aux autres, les plans de séparation (P) desdits modules (16, 17, 18) étant sensiblement alignés dans un même plan.

6. Procédé de sélection (100) selon les revendications 4 et 5 prises ensemble, comprenant une étape supplémentaire (142c) de choix, en fonction de la valeur de la puissance frigorifique globale, d'au moins un module d'injection de la puissance frigorifique dans lequel l'injection de la puissance frigorifique est simulée, le module d'injection de la puissance frigorifique étant constitué par un unique module central (17) de l'armoire (1) lorsque la valeur de la puissance frigorifique globale est strictement inférieure à une valeur prédéterminée, et les modules d'injection de la puissance frigorifique étant constitués par deux modules périphériques (16, 18) de l'armoire (1) lorsque la valeur de la puissance frigorifique globale est supérieure à la valeur prédéterminée

7. Procédé de sélection (100) selon l'une quelconque des revendications précédentes, dans lequel les architectures envisagées comprennent les architectures suivantes :

 - une première architecture, dans laquelle le plan de séparation (P) est obstrué sur sensiblement l'intégralité de sa surface,
 - une deuxième architecture, dans laquelle une fenêtre (29) de surface supérieure à 2% de la surface du plan de séparation (P) est laissée libre dans le plan de séparation (P), de sorte à faciliter la circulation d'air entre les première et seconde zones thermiques (E1, E2), et
 - une troisième architecture, dans laquelle une fenêtre (29) de surface supérieure à 2% de la surface du plan de séparation (P) est laissée libre dans le plan de séparation (P), de sorte à faciliter la circulation d'air entre les première et seconde zones thermiques (E1, E2), et au moins un ventilateur (26b) est installé dans le plan de séparation (P), de sorte à forcer la convection d'air de la première zone thermique (E1) vers la deuxième zone thermique (E2).

8. Procédé de sélection (100) selon la revendication 7, dans lequel la fenêtre (29) est disposée en partie haute du plan de séparation (P), et le ou chaque ventilateur (26b) est disposé en partie basse du plan de séparation (P).

9. Procédé de sélection (100) selon l'une quelconque des revendications précédentes, comprenant une étape (160) d'affichage de l'architecture sélectionnée.

10. Procédé de sélection (100) selon l'une quelconque des revendications précédentes, comprenant les étapes supplémentaires suivantes :

 - calcul (170), pour l'architecture sélectionnée, à partir des données relatives à l'armoire électrique (1), et en simulant le cas échéant l'injection de la puissance frigorifique à injecter dans la première zone thermique (E1) d'au moins un module (16, 17, 18) de l'armoire (1), d'une première température moyenne dans la ou les première(s) zone(s) thermique(s) et d'une deuxième température moyenne dans la ou les deuxième(s) zone(s) thermique(s), et
 - affichage (180) des première et deuxième températures moyennes.

11. Procédé de sélection (100) selon l'une quelconque des revendications précédentes, comprenant, en l'absence d'identification d'une architecture dite passive, une étape (190) d'affichage de la puissance frigorifique minimale.

12. Produit programme d'ordinateur comprenant des instructions logicielles qui, lorsqu'elles sont exécutées par un ordinateur, résultent en la mise en oeuvre d'un procédé de sélection (100) selon l'une quelconque des revendications précédentes.

13. Support physique comprenant une mémoire dans laquelle est stocké un produit programme d'ordinateur selon la revendication 12.

14. Dispositif électronique (50) de sélection d'une architecture d'armoire électrique (1), ladite armoire électrique (1) comprenant au moins un module (16, 17, 18) dans lequel sont logées une pluralité d'unités fonctionnelles électriques (22a), lesdites unités fonctionnelles électriques (22a) étant agencées suivant un plan (P) de séparation du module (16, 18, 18) délimitant :

 - une première zone thermique froide (E1) formée par un premier espace du module (16, 17, 18) situé d'un premier côté du plan de séparation (P), et

- une seconde zone thermique d'échauffement (E2) formée par un deuxième espace du module situé d'un deuxième côté du plan de séparation (P),

**caractérisé en ce que** le dispositif électronique (50) comprend :

- un premier organe de recherche (52), programmé pour rechercher, à partir de données relatives à l'armoire électrique (1), parmi une pluralité d'architectures envisagées pour l'armoire électrique (1), une architecture dite passive pour laquelle la température à l'intérieur de chaque première et deuxième zone thermique (E1, E2) du ou de chaque module (16, 17, 18) est inférieure à une température de consigne prédéterminée pour ladite zone thermique (E1, E2), sans injection d'une puissance frigorifique à l'intérieur de l'armoire (1),
- un deuxième organe de recherche (54), programmé pour rechercher, en l'absence d'identification d'une architecture dite passive, à partir des données relatives à l'armoire électrique (1), parmi la pluralité d'architectures envisagées, une architecture dite économe pour laquelle les températures de consigne prédéterminées pour chacune des première et deuxième zones thermiques (E1, E2) du ou de chaque module (16, 17, 18) sont atteintes par l'injection, dans la première zone thermique (E1) d'au moins un module (16, 17, 18) de l'armoire électrique (1), d'une puissance frigorifique minimale, et
- un organe (55) de sélection d'une architecture parmi la pluralité d'architectures envisagées, programmé pour sélectionner l'architecture dite passive en cas d'identification d'une architecture dite passive, et pour sélectionner l'architecture dite économe en l'absence d'identification d'une architecture dite passive.

15. Ensemble **caractérisé en ce qu'**il comporte :

- une armoire électrique (1) comprenant au moins un module (16, 17, 18) dans lequel sont logées une pluralité d'unités fonctionnelles électriques (22a), lesdites unités fonctionnelles électriques (22a) étant agencées suivant un plan de séparation (P) du module (16, 17, 18) délimitant :

  ◦ une première zone thermique froide (E1) formée par un premier espace du module (16, 17, 18) situé d'un premier côté du plan de séparation (P), et
  ◦ une seconde zone thermique d'échauffement (E2) formée par un deuxième espace du module (16, 17, 18) situé d'un deuxième côté du plan de séparation (P), et

- un dispositif électronique de sélection d'une architecture de ladite armoire électrique (1), ledit dispositif électronique de sélection étant un dispositif électronique de sélection selon la revendication 14.

**Patentansprüche**

1. Verfahren (100) zum Auswählen einer Architektur eines Schaltschranks (1), wobei der Schaltschrank (1) wenigstens ein Modul (16, 17, 18) umfasst, in dem mehrere elektrische funktionale Einheiten (22a) untergebracht sind, wobei die elektrischen funktionalen Einheiten (22a) längs einer Trennebene (P) des Moduls (16, 17, 18) angeordnet sind, die Folgendes begrenzt:

   - eine erste, kalte thermische Zone (E1), die durch einen ersten Raum des Moduls (16, 17, 18), der sich auf einer ersten Seite der Trennebene (P) befindet, gebildet ist und
   - eine zweite, heiße thermische Zone (E2), die durch einen zweiten Raum des Moduls (16, 17, 18), der sich auf einer zweiten Seite der Trennebene (P) befindet, gebildet ist,

   **dadurch gekennzeichnet, dass** das Verfahren (100) durch einen Computer ausgeführt wird und die folgenden Schritte umfasst:

   - Suchen (110) anhand von Daten, die auf den Schaltschrank (1) bezogen sind, unter mehreren Architekturen, die für den Schaltschrank (1) in Betracht kommen, nach einer sogenannten passiven Architektur, für die die Temperatur im Inneren der ersten und der zweiten thermischen Zone (E1, E2) des oder jedes Moduls (16, 17, 18) niedriger als eine vorgegebene Solltemperatur für die thermische Zone (E1, E2) ohne Einleitung von Kälteerzeugungsleistung in den Schaltschrank (1) ist, und
   - mit Identifizierung einer sogenannten passiven Architektur:

     ◦ Auswählen (130) der sogenannten passiven Architektur

- ohne Identifizierung einer sogenannten passiven Architektur:

◦ Suchen (140) anhand von Daten, die auf den Schaltschrank (1) bezogen sind, unter mehreren in Betracht gezogenen Architekturen (1) nach einer sogenannten sparsamen Architektur, für die die vorgegebenen Solltemperaturen für die erste und die zweite thermische Zone (E1, E2) des oder jedes Moduls (16, 17, 18) durch Einleiten einer minimalen Kälteerzeugungsleistung in die erste thermische Zone (E1) wenigstens eines Moduls (16, 17, 18) des Schaltschranks (1) erreicht werden und
◦ Auswählen (150) der sogenannten sparsamen Architektur.

2. Auswahlverfahren (100) nach Anspruch 1, wobei der Schritt des Suchens der sogenannten passiven Architektur (110) die folgenden Unterschritte umfasst:

- Berechnen (112) anhand von Daten, die auf den Schaltschrank (1) bezogen sind, für jede Architektur der mehreren in Betracht gezogenen Architekturen einer ersten Betriebstemperatur in der ersten thermischen Zone (E1) des oder jedes Moduls (16, 17, 18) und einer zweiten Betriebstemperatur in der zweiten thermischen Zone (E2) des oder jedes Moduls (16, 17, 18),
- Vergleichen (114) jeder ersten und jeder zweiten berechneten Betriebstemperatur mit der Solltemperatur für die entsprechende erste oder zweite thermische Zone (E1, E2) und
- Bestimmen (116) jeder Architektur, für die jede erste und jede zweite berechnete Temperatur niedriger als die Solltemperatur für die entsprechende erste bzw. zweite thermische Zone (E1, E2) ist, als eine sogenannte passive Architektur.

3. Auswahlverfahren (100) nach Anspruch 1 oder 2, wobei der Schritt des Suchens der sogenannten sparsamen Architektur (140) die folgenden Unterschritte umfasst:

- Berechnen (142) anhand von Daten, die auf den Schaltschrank (1) bezogen sind, für jede Architektur der mehreren in Betracht gezogenen Architekturen einer Kälteerzeugungsleistung, die in die erste thermische Zone (E1) wenigstens eines Moduls (16, 17, 18) des Schranks (1) eingeleitet werden soll, um die vorgegebenen Solltemperaturen in der ersten und der zweiten thermischen Zone (E1, E2) des oder jedes Moduls (16, 17, 18) zu erreichen, und
- Vergleichen (144) der Kälteerzeugungsleistung, die für jede in Betracht gezogene Architektur eingeleitet werden soll, mit der Kälteerzeugungsleistung, die für jede andere in Betracht gezogene Architektur eingeleitet werden soll, wobei die kleinste einzuleitende Kälteerzeugungsleistung die minimale Kälteerzeugungsleistung bildet.

4. Auswahlverfahren (100) nach Anspruch 3, wobei der Schritt des Berechnens der einzuleitenden Kälteerzeugungsleistung (142) für jede Architektur der mehreren in Betracht gezogenen Architekturen die folgenden Unterschritte umfasst:

- Berechnen (142a) anhand von Daten, die auf den Schaltschrank (1) bezogen sind, für jede erste und jede zweite thermische Zone (E1, E2) des oder jedes Moduls (16, 17, 18) einer lokalen Kälteerzeugungsleistung, die in die thermische Zone (E1, E2) eingeleitet werden muss, um die Solltemperatur für die thermische Zone (E1, E2) zu erreichen,
- Berechnen (142b) einer globalen Kälteerzeugungsleistung zusätzlich zu den lokalen Kälteerzeugungsleistungen,
- Berechnen (142d) anhand von Daten, die auf den Schaltschrank (1) bezogen sind, und durch Simulieren des Einleitens der globalen Kälteerzeugungsleistung in die erste thermische Zone (E1) wenigstens eines Moduls (16, 17, 18) des Schranks (1) von Betriebstemperaturen in der ersten und der zweiten thermischen Zone (E1, E2) des oder jedes Moduls (16, 17, 18),
- Vergleichen (142e) jeder berechneten Betriebstemperatur mit der Solltemperatur für die entsprechende thermische Zone (E1, E2) und
- falls jede berechnete Temperatur niedriger als die Solltemperatur für die entsprechende thermische Zone ist:

◦ Bestimmen (142g) der globalen Kälteerzeugungsleistung als die einzuleitende Kälteerzeugungsleistung,

- falls wenigstens eine berechnete Temperatur streng größer als die Solltemperatur für die entsprechende thermische Zone ist:

◦ Wiederholen (142h) der Schritte des Berechnens der Temperaturen (142d) und des Vergleichens der Temperaturen (142e), bis jede berechnete Temperatur niedriger als die Solltemperatur für die entsprechende thermische Zone (E1, E2) ist, wobei die Simulation des Einleitens der globalen Kälteerzeugungsleistung in die erste thermische Zone (E1) wenigstens eines Moduls (16, 17, 18) des Schranks (1) bei jeder Wiederholung durch die Simulation der Einleitung in die erste thermische Zone (E1) einer Kälteerzeugungsleistung mit einer Intensität, die höher als die Intensität der Kälteerzeugungsleistung ist, deren Einleitung in der vorhergehenden Wiederholung simuliert worden ist, ersetzt wird, und
◦ Bestimmen (142g) der Kälteerzeugungsleistung, deren Einleitung in der letzten Wiederholung simuliert worden ist, als die einzuleitende Kälteerzeugungsleistung.

5. Auswahlverfahren (100) nach einem der vorhergehenden Ansprüche, wobei der Schrank (1) mehrere aneinandergefügte Module (16, 17) umfasst, wobei die Trennebenen (P) der Module (16, 17, 18) im Wesentlichen auf dieselbe Ebene ausgerichtet sind.

6. Auswahlverfahren (100) nach den Ansprüchen 4 und 5 zusammengenommen, das einen zusätzlichen Schritt (142c) des Wählens als Funktion des Wertes der globalen Kälteerzeugungsleistung wenigstens eines Moduls zum Einleiten der Kälteerzeugungsleistung, in dem die Einleitung der Kälteerzeugungsleistung simuliert wird, wobei das Modul zum Einleiten der Kälteerzeugungsleistung durch ein einziges zentrales Modul (17) des Schranks (1) gebildet wird, wenn der Wert der globalen Kälteerzeugungsleistung streng kleiner als ein vorgegebener Wert ist, und die Module zum Einleiten der Kälteerzeugungsleistung durch zwei Peripheriemodule (16, 18) des Schranks (1) gebildet werden, wenn der Wert der globalen Kälteerzeugungsleistung höher als der vorgegebene Wert ist.

7. Auswahlverfahren (100) nach einem der vorhergehenden Ansprüche, wobei die in Betracht gezogenen Architekturen die folgenden Architekturen umfassen:

- eine erste Architektur, in der die Trennebene (P) im Wesentlichen auf ihrer gesamten Oberfläche gesperrt ist,
- eine zweite Architektur, in der ein Fenster (29) der oberen Oberfläche mit 2 % der Oberfläche der Trennebene (P) in der Trennebene (P) freigelassen ist, derart, dass die Zirkulation von Luft zwischen der ersten und der zweiten thermischen Zone (E1, E2) erleichtert wird, und
- eine dritte Architektur, in der ein Fenster (29) in der oberen Oberfläche mit 2 % der Oberfläche der Trennebene (P) in der Trennebene (P) freigelassen ist, derart, dass die Zirkulation von Luft zwischen der ersten und der zweiten thermischen Zone (E1, E2) erleichtert wird, und wenigstens ein Ventilator (26b) in der Trennebene (P) installiert ist, derart, dass die Luftkonvektion von der ersten thermischen Zone (E1) in die zweite thermische Zone (E2) erzwungen wird.

8. Auswahlverfahren (100) nach Anspruch 7, wobei das Fenster (29) im oberen Teil der Trennebene (P) angeordnet ist und der oder jeder Ventilator (26b) im unteren Teil der Trennebene (P) angeordnet ist.

9. Auswahlverfahren (100) nach einem der vorhergehenden Ansprüche, das einen Schritt (160) des Anzeigens der ausgewählten Architektur umfasst.

10. Auswahlverfahren (100) nach einem der vorhergehenden Ansprüche, das die folgenden zusätzlichen Schritte umfasst:

- Berechnen (170) für die ausgewählte Architektur anhand von Daten, die auf den Schaltschrank (1) bezogen sind, und durch Simulieren gegebenenfalls des Einleitens der Kälteerzeugungsleistung, die in die erste thermische Zone (E1) wenigstens eines Moduls (16, 17, 18) des Schranks (1) eingeleitet werden soll, einer ersten mittleren Temperatur in der oder den ersten thermischen Zonen und einer zweiten mittleren Temperatur in der oder den zweiten thermischen Zonen und
- Anzeigen (180) der ersten und der zweiten mittleren Temperatur.

11. Auswahlverfahren (100) nach einem der vorhergehenden Ansprüche, das ohne Identifizierung einer sogenannten passiven Architektur einen Schritt (190) des Anzeigens der minimalen Kälteerzeugungsleistung umfasst.

12. Computerprogrammprodukt, das Software-Befehle enthält, die dann, wenn sie durch einen Computer abgearbeitet werden, die Ausführung eines Auswahlverfahrens (100) nach einem der vorhergehenden Ansprüche zur Folge haben.

**13.** Physikalischer Träger, der einen Speicher enthält, in dem ein Computerprogrammprodukt nach Anspruch 12 gespeichert ist.

**14.** Elektronische Vorrichtung (50) für die Auswahl einer Architektur eines Schaltschranks (1), wobei der Schaltschrank (1) wenigstens ein Modul (16, 17, 18) umfasst, in dem mehrere elektrische funktionale Einheiten (22a) untergebracht sind, wobei die elektrischen funktionalen Einheiten (22a) längs einer Trennebene (P) des Moduls (16, 17, 18) angeordnet sind, die Folgendes begrenzt:

- eine erste, kalte thermische Zone (E1), die durch einen ersten Raum des Moduls (16, 17, 18) gebildet ist, der sich auf einer ersten Seite der Trennebene (P) befindet, und
- eine zweite, heiße thermische Zone (E2), die durch einen zweiten Raum des Moduls gebildet ist, der sich auf einer zweiten Seite der Trennebene (P) befindet,

**dadurch gekennzeichnet, dass** die elektronische Vorrichtung (50) Folgendes umfasst:

- ein erstes Suchorgan (52), das programmiert ist, anhand von Daten, die auf den Schaltschrank (1) bezogen sind, unter mehreren für den Schaltschrank (1) in Betracht gezogenen Architekturen eine sogenannte passive Architektur zu suchen, für die die Temperatur im Inneren der ersten und der zweiten thermischen Zone (E1, E2) des oder jedes Moduls (16, 17, 18) niedriger als eine vorgegebene Solltemperatur für die thermische Zone (E1, E2) ohne Einleitung einer Kälteerzeugungsleistung in den Schrank (1) ist,
- ein zweites Suchorgan (54), das programmiert ist, ohne Identifizierung einer sogenannten passiven Architektur anhand von Daten, die auf den Schaltschrank (1) bezogen sind, unter den mehreren in Betracht gezogenen Architekturen eine sogenannte sparsame Architektur zu suchen, für die die vorgegebenen Solltemperaturen für die erste und die zweite thermische Zone (E1, E2) des oder jedes Moduls (16, 17, 18) durch Einleiten einer minimalen Kälteerzeugungsleistung in die erste thermische Zone (E1) wenigstens eines Moduls (16, 17, 18) des Schaltschranks (1) erreicht werden und
- ein Organ (55) für die Auswahl einer Architektur unter den mehreren in Betracht gezogenen Architekturen, das programmiert ist, um die sogenannte passive Architektur bei einer Identifizierung einer sogenannten passiven Architektur auszuwählen und um die sogenannte sparsame Architektur ohne Identifizierung einer sogenannten passiven Architektur auszuwählen.

**15.** Anordnung, **gekennzeichnet durch**:

- einen Schaltschrank (1), der wenigstens ein Modul (16, 17, 18) umfasst, in dem mehrere elektrische funktionale Einheiten (22a) untergebracht sind, wobei die elektrischen funktionalen Einheiten (22) in einer Trennebene (P) des Moduls (16, 17, 18) angeordnet sind, die Folgendes begrenzt:

  ◦ eine erste, kalte thermische Zone (E1), die durch einen ersten Raum des Moduls (16, 17, 18) gebildet ist, der sich auf einer ersten Seite der Trennebene (P) befindet, und
  ◦ eine zweite, heiße thermische Zone (E2), die durch einen zweiten Raum des Moduls (16, 17, 18) gebildet ist, der sich auf einer zweiten Seite der Trennebene (P) befindet, und

- eine elektronische Vorrichtung für die Auswahl einer Architektur des Schaltschranks (1), wobei die elektronische Auswahlvorrichtung eine elektronische Auswahlvorrichtung nach Anspruch 14 ist.

**Claims**

**1.** Method (100) of selecting an architecture for an electrical cabinet (1), said electrical cabinet (1) comprising at least one module (16, 17, 18) wherein a plurality of functional electrical units (22a) are housed, said functional electrical units (22a) being arranged along a separation plane (P) of the module (16, 17, 18) delimiting:

- a first cold thermal zone (E1) formed by a first space of the module (16, 17, 18) situated on a first side of the separation plane (P), and
- a second heating thermal zone (E2) formed by a second space of the module (16, 17, 18) situated on a second side of the separation plane (P),

**characterised in that** the method (100) is implemented by computer and comprises the following steps:

- searching (110), from data related to the electrical cabinet (1), among a plurality of architectures proposed for the electrical cabinet (1), for a so-called passive architecture for which the temperature inside each first and second thermal zone (E1, E2) of the or of each module (16, 17, 18) is lower than a predetermined setpoint temperature for said thermal zone (E1, E2), without injection of cooling power inside the cabinet (1), and
- if a so-called passive architecture is identified:

   ∘ selection (130) of the so-called passive architecture,

- if a so-called passive architecture is not identified:

   ∘ searching (140), from data related to the electrical cabinet (1), among the plurality of proposed architectures (1), for a so-called economical architecture for which the predetermined setpoint temperatures for each of the first and second thermal zones (E1, E2) of the or of each module (16, 17, 18) are achieved by injection, into the first thermal zone (E1) of at least one module (16, 17, 18) of the electrical cabinet (1), of a minimal cooling power, and
   o selection (150) of said so-called economical architecture.

**2.** Selection method (100) according to claim 1, wherein the step of searching for the so-called passive architecture (110) comprises the following substeps:

- calculation (112), from data related to the electrical cabinet (1), for each architecture of the plurality of proposed architectures, of a first operating temperature in the first thermal zone (E1) of the or of each module (16, 17, 18) and of a second operating temperature in the second thermal zone (E2) of the or of each module (16, 17, 18),
- comparison (114) of each of the first and second calculated operating temperatures with the preset temperature for the respective first or second thermal zone (E1, E2), and
- determination (116) of each architecture for which each of the first and second calculated temperatures is lower than the preset temperature for the respective first or second thermal zone (E1, E2) as a so-called passive architecture.

**3.** Selection method (100) according to claim 1 or 2, wherein the step of searching for the so-called economical architecture (140) comprises the following substeps:

- calculation (142), from data related to the electrical cabinet (1), for each architecture of the plurality of proposed architectures, of a cooling power to be injected into the first thermal zone (E1) of at least one module (16, 17, 18) of the cabinet (1) in order to achieve the predetermined setpoint temperatures in the first and second thermal zones (E1, E2) of the or of each module (16, 17, 18), and,
- comparison (144) of the cooling power to be injected for each proposed architecture with the cooling power to be injected for each of the other proposed architectures, the lowest cooling power to be injected constituting the minimal cooling power.

**4.** Selection method (100) according to claim 3, wherein the step of calculating the cooling power to be injected (142) comprises, for each architecture of the plurality of proposed architectures, the following substeps:

- calculation (142a), from data related to the electrical cabinet (1), for each of the first and second thermal zones (E1, E2) of the or of each module (16, 17, 18), of a local cooling power that must be injected into said thermal zone (E1, E2) in order to achieve the setpoint temperature for said thermal zone (E1, E2),
- calculation (142b) of a total cooling power by addition of the local cooling powers,
- calculation (142d), from data related to the electrical cabinet (1), and by simulating the injection of the total cooling power into the first thermal zone (E1) of at least one module (16, 17, 18) of the cabinet (1), of the operating temperatures in each of the first and second thermal zones (E1, E2) of the or of each module (16, 17, 18),
- comparison (142e) of each calculated operating temperature with the preset temperature for the respective thermal zone (E1, E2), and
- if each calculated temperature is lower than the setpoint temperature for the respective thermal zone:

   ∘ determination (142g) of the total cooling power as being the cooling power to be injected,

- in a case in which at least one calculated temperature is clearly higher than the setpoint temperature for the respective thermal zone:

◦ reiteration (142h) of the steps of calculating temperatures (142d) and of comparing temperatures (142e) until each calculated temperature is less than the setpoint temperature for the respective thermal zone (E1, E2), the simulation of the injection of the total cooling power into the first thermal zone (E1) of at least one module (16, 17, 18) of the cabinet (1) being replaced, in each iteration, by the simulation of the injection into the first thermal zone (E1) of a cooling power of higher intensity than the intensity of the cooling power for which the injection was simulated in the preceding iteration, and

o determination (142g) of the cooling power for which the injection was simulated in the last iteration as being the cooling power to be injected.

5. Selection method (100) according to any one of the preceding claims, wherein the cabinet (1) comprises a plurality of modules (16, 17, 18) coupled to each other, the separation planes (P) of said modules (16, 17, 18) being substantially aligned in a same plane.

6. Selection method (100) according to claims 4 and 5 taken together, comprising an additional step (142c) of choosing, based on the value of the total cooling power, at least one injection module of the cooling power in which the injection of the cooling power is simulated, the injection module of the cooling power being constituted by a single central module (17) of the cabinet (1) when the value of the total cooling power is clearly lower than a predetermined value, and the injection modules of the cooling power being constituted by two peripheral modules (16, 18) of the cabinet (1) when the value of the total cooling power is greater than the predetermined value.

7. Selection method (100) according to any one of the preceding claims, wherein the proposed architectures comprise the following architectures:

- a first architecture, wherein the separation plane (P) is obstructed over substantially its entire surface,
- a second architecture, wherein a window (29) of surface area of more than 2% of the surface area of the separation plane (P) is left free in the separation plane (P), in such a way as to facilitate the circulation of air between the first and second thermal zones (E1, E2), and
- a third architecture, wherein a window (29) of surface area of more than 2% of the surface area of the separation plane (P) is left free in the separation plane (P), in such a way as to facilitate the circulation of air between the first and second thermal zones (E1, E2), and at least one fan (26b) is installed in the separation plane (P), in such a way as to force the convection of air from the first thermal zone (E1) to the second thermal zone (E2).

8. Selection method (100) according to claim 7, wherein the window (29) is disposed in the upper part of the separation plane (P), and the or each fan (26b) is disposed in the lower part of the separation plane (P).

9. Selection method (100) according to any one of the preceding claims, comprising a step (160) of displaying the selected architecture.

10. Selection method (100) according to any one of the preceding claims, comprising the following additional steps:

- calculation (170), for the selected architecture, from data related to the electrical cabinet (1), and, if appropriate, while simulating the injection of the cooling power to be injected into the first thermal zone (E1) of at least one module (16, 17, 18) of the cabinet (1), of a first average temperature in the first thermal zone(s) and of a second average temperature in the second thermal zone(s), and
- display (180) of the first and second average temperatures.

11. Selection method (100) according to any one of the preceding claims, comprising, in the absence of identification of a so-called passive architecture, a step (190) of displaying the minimal cooling power.

12. Computer program product comprising software instructions which, when executed by a computer, result in the implementation of a selection method (100) according to any one of the preceding claims.

13. Physical medium comprising a memory in which a computer program product according to claim 12 is stored.

14. Electronic device (50) for selecting an architecture for an electrical cabinet (1), said electrical cabinet (1) comprising at least one module (16, 17, 18) wherein a plurality of functional electrical units (22a) are housed, said functional electrical units (22a) being arranged along a separation plane (P) of the module (16, 18, 18) delimiting:

- a first cold thermal zone (E1) formed by a first space of the module (16, 17, 18) situated on a first side of the separation plane (P), and
- a second heating thermal zone (E2) formed by a second space of the module situated on a second side of the separation plane (P),

**characterised in that** the electronic device (50) comprises:

- a first search device (52), programmed to search, from data related to the electrical cabinet (1), among a plurality of proposed architectures for the electrical cabinet (1), for a so-called passive architecture for which the temperature inside each first and second thermal zone (E1, E2) of the or of each module (16, 17, 18) is lower than a predetermined setpoint temperature for said thermal zone (E1, E2), without injection of cooling power inside the cabinet (1),
- a second search device (54), programmed to search, in the absence of identifying a so-called passive architecture, from data related to the electrical cabinet (1), among the plurality of proposed architectures, for a so-called economical architecture for which the predetermined setpoint temperatures for each of the first and second thermal zones (E1, E2) of the or of each module (16, 17, 18) are achieved by injection, into the first thermal zone (E1) of at least one module (16, 17, 18) of the electrical cabinet (1), of a minimal cooling power, and
- a device (55) for selecting an architecture from among the plurality of proposed architectures, programmed to select the so-called passive architecture in the event that a so-called passive architecture is identified, and for selecting the so-called economical architecture in the absence of identification of a so-called passive architecture.

15. Unit **characterised in that** it comprises:

- an electrical cabinet (1) comprising at least one module (16, 17, 18) wherein a plurality of functional electrical units (22a) are housed, said functional electrical units (22a) being arranged along a separation plane (P) of the module (16, 17, 18) delimiting:

   ◦ a first cold thermal zone (E1) formed by a first space of the module (16, 17, 18) situated on a first side of the separation plane (P), and
   ◦ a second heating thermal zone (E2) formed by a second space of the module (16, 17, 18) situated on a second side of the separation plane (P), and

- an electronic device for selecting an architecture of said electrical cabinet (1), said electronic selection device being an electronic selection device according to claim 14.

FIG.1

22

24

## FIG.2

26    26    26

P

20    26a

1

22a

22a    26a

11    -E2-    -E1-    10

26a    22a

26a    22a

## FIG.3    26a

FIG.4

FIG.5

**FIG.6**

FIG.7

## RÉFÉRENCES CITÉES DANS LA DESCRIPTION

**Documents brevets cités dans la description**

- WO 2013083421 A
- EP 2779334 A
- EP 2779335 A